# EUROPEAN PATENT APPLICATION

(11) **EP 4 851 798 A1**
(43) Date of publication of application: **09.12.2026**
(21) Application number: 26180091.6
(22) Date of filing: 21.05.2026
(51) Int. Cl.: G06F 9/46, G06F 9/38, G06F 9/48

(54) **REUSING THREAD IDENTIFICATION VALUES WHEN EXECUTING CONCURRENT THREADS**

(30) Priority: 21.05.2025 US 202519214099; 30.10.2025 US 202519373773
(71) Applicant: Next Silicon Ltd, 5348303 Givatayim (IL)
(72) Inventor: RAZ, Elad, 5251505 Ramat Gan (IL); TAYARI, Ilan, 9987500 Tzur Hadassa (IL); GAL, Ronen, 5257218 Ramat Gan (IL)
(74) Representative: Tiburzi, Andrea

(57) **Abstract**

A system for executing concurrent threads, comprising: context storages for storing thread contexts, wherein at least one context storage comprises multiple logical banks; credit-trackers, each associated with one of the context storages and an identification value; and processing circuitry configured to, while a first and a second thread, both associated with a common identification value, are executed simultaneously by the processing circuitry: store a context in a bank of a context storage, the context identified in the context storage by the common value and a bank identifier; store a second context in another bank of the context storage, the second context identified in the context storage by the common value and another bank identifier that follows the bank identifier in cyclic sequence; and upon the second thread completing an operation associated with the context storage, add a new credit to the credit-tracker only after the first thread completes said operation.

## Description

### BACKGROUND

Some embodiments described in the present disclosure relate to concurrent execution in a computerized system and, more specifically, but not exclusively, to executing one or more dataflow graphs using a plurality of concurrent threads of execution.

As used herewithin, the term reconfigurable processing grid refers to processing circuitry comprising a plurality of reconfigurable logical elements connected by a plurality of reconfigurable data routing junctions where the plurality of reconfigurable logical elements and additionally or alternatively the plurality of reconfigurable data routing junctions may be manipulated, in each of one or more iterations, to execute one or more operations. As used herewithin, the term dataflow means a computer-programming paradigm that models at least part of a software program as a directed graph of data (a dataflow graph) flowing between operations such that a series of operations is applied to each data element in a sequence of data elements of the dataflow graph. Optionally, a dataflow graph comprises a plurality of nodes, each applying an operation to a data element, and a plurality of directed edges, each connecting two of the plurality of nodes and indicative of a flow of data between the two nodes.

In the field of computer science, a thread of execution is a sequence of computer instructions that can be managed independently, for example by a scheduler. For brevity, the term "thread" is used to mean "a thread of execution" and the terms are used interchangeably herewithin. A thread may implement a dataflow graph. In data flow architectures, threads progress through a computation pipeline comprising multiple computation elements. As used herein, the term "computation element" refers to a hardware component configured to perform one or more operations on data in a thread. Some examples of computation elements include arithmetic logic units, floating-point units, memory access units, and control flow units. As used herewithin, the term "projection" refers to a process of manipulating one or more reconfigurable logical elements of a reconfigurable processing grid, and additionally or alternatively manipulating one or more reconfigurable data routing junctions of the reconfigurable processing grid, to execute a dataflow graph. Thus, projecting a thread implementing a dataflow graph onto a reconfigurable processing grid refers to configuring the reconfigurable processing grid by manipulating one or more reconfigurable logical elements of the reconfigurable processing grid, and additionally or alternatively manipulating one or more reconfigurable data routing junctions of the reconfigurable processing grid, to execute the dataflow graph that is implemented by the thread.

In the field of computer science, concurrent computing refers to executing multiple threads of execution of a software program simultaneously. Executing multiple threads of a software program simultaneously allows increasing the overall performance and responsiveness of a system. Metrics used to measure a system's performance include, but are not limited to, a number of tasks executed by the system in an identified amount of time (throughput), an amount of time to complete execution of a task (latency) and an amount of computer memory used by the system when operating. Concurrent computing may be used to increase throughput and reduce latency of a system.

It may be that each of a plurality of concurrent threads comprises one or more identified operations. When executing a plurality of concurrent threads simultaneously on a reconfigurable processing grid, each concurrent thread of the plurality of concurrent threads is projected onto part of the reconfigurable processing grid, i.e., some of a plurality of logical elements of the reconfigurable processing grid are manipulated to execute the concurrent thread, for example to execute a dataflow graph implemented by the concurrent thread.

There exist computer instructions whose latency for completion is inconsistent and unpredictable. Such an operation may require a different amount of time to execute when executed more than once, and additionally or alternatively may require more time to complete than other instructions. Some examples of such inconsistent latency operations include, but are not limited to, memory access, access to a peripheral device and executing a compute kernel.

### SUMMARY

Some embodiments described in the present disclosure relate to concurrent execution in a computerized system and, more specifically, but not exclusively, to executing one or more dataflow graphs using a plurality of concurrent threads of execution.

When a thread executing a pipeline of operations encounters an operation with inconsistent execution times the thread may be suspended, requiring the thread's context to be stored. When the thread's context is stored in a context storage configured to store more than one thread context, the thread's context is identified by an identifier associated with the thread. Some existing solutions require using unique identifiers to identify a thread's context throughout the pipeline of operations. It is an object of some embodiments described in the present disclosure to provide a system and a method for executing concurrent threads by a plurality of processing circuitries with out-of-order execution capabilities while optimizing the use of context storage resources. In such embodiments, multiple concurrent threads of a plurality of concurrent threads share the same identifier in a pipeline of operations executed by the plurality of processing circuitries.

Reusing an identifier at different stages of the pipeline allows reducing the amount of storage required to store thread contexts for the plurality of concurrent threads executing concurrently in the pipeline compared to requiring each thread to have a unique identifier, requiring each context storage at each point of the pipeline to support storage of a thread with any of the unique identifiers. Looking at the problem from another direction, the suggested solution allows increasing the number of threads that can execute concurrently in the pipeline beyond another number of threads that each context storage can store at once.

The present disclosure describes two approaches to achieving this goal. In a first approach, thread contexts may be stored such that each identification value is unique within any single context storage, with threads progressing through different context storages associated with different operations. In a second approach, multiple threads sharing the same identification value may be stored simultaneously within the same context storage using a multi-bank architecture with credit-based management to preserve execution order.

The foregoing and other objects are achieved by the features of the independent claims. Further implementation forms are apparent from the dependent claims, the description and the figures.

According to a first aspect, a system for executing a plurality of concurrent threads, comprises a plurality of context storages, each configured to store a plurality of thread contexts, each thread context for one of a plurality of concurrent threads, each concurrent thread comprising a plurality of operations, each of the plurality of context storages associated with at least one operation of the plurality of operations; and at least one processing circuitry configured to: while a first thread and a second thread of the plurality of concurrent threads are executed simultaneously by the at least one processing circuitry: store a first thread context of the first thread in a first context storage of the plurality of context storages, the first thread context identified in the first context storage by an identification value; store a second thread context of the second thread in a second context storage of the plurality of context storages, the second thread context identified in the second context storage by the identification value; and upon completing execution of at least one first operation of the first thread, the at least one first operation associated with the first context storage, when an outcome of applying an availability test to the identification value indicates that the identification value is available in the second context storage, store the first thread context in the second context storage, the first thread context identified in the second context storage by the identification value. Releasing a thread's identifier in its current storage when the thread completes operation at a particular stage and moves forward makes that identifier available for another thread. This availability mechanism ensures that while identifiers can be reused across different stages, no conflicts occur within any single stage.

According to a second aspect, a method for executing a plurality of concurrent threads, comprises: while a first thread and a second thread of a plurality of concurrent threads are executed simultaneously by at least one processing circuitry: storing, by the at least one processing circuitry, a first thread context of the first thread in a first context storage of a plurality of context storages, the first thread context identified in the first context storage by an identification value, where each of the plurality of context storages is configured to store a plurality of thread contexts, each thread context for one of the plurality of concurrent threads, each concurrent thread comprising a plurality of operations, each of the plurality of context storages associated with at least one operation of the plurality of operations; storing, by the at least one processing circuitry, a second thread context of the second thread in a second context storage of the plurality of context storages, the second thread context identified in the second context storage by the identification value; and upon completing execution of at least one first operation of the first thread, the at least one first operation associated with the first context storage, when an outcome of applying a credit test to the identification value indicates that the identification value is available in the second context storage, storing, by the at least one processing circuitry, the first thread context in the second context storage, the first thread context identified in the second context storage by the identification value.

According to a third aspect, a software program product for executing a plurality of concurrent threads, comprises: a non-transitory computer readable storage medium; program instructions for: while a first thread and a second thread of a plurality of concurrent threads are executed simultaneously by at least one processing circuitry: storing, by the at least one processing circuitry, a first thread context of the first thread in a first context storage of a plurality of context storages, the first thread context identified in the first context storage by an identification value, where each of the plurality of context storages is configured to store a plurality of thread contexts, each thread context for one of the plurality of concurrent threads, each concurrent thread comprising a plurality of operations, each of the plurality of context storages associated with at least one operation of the plurality of operations; storing, by the at least one processing circuitry, a second thread context of the second thread in a second context storage of the plurality of context storages, the second thread context identified in the second context storage by the identification value; and upon completing execution of at least one first operation of the first thread, the at least one first operation associated with the first context storage, when an outcome of applying a credit test to the identification value indicates that the identification value is available in the second context storage, storing, by the at least one processing circuitry, the first thread context in the second context storage, the first thread context identified in the second context storage by the identification value; wherein the program instructions are executed by at least one computerized processor from the non-transitory computer readable storage medium.

According to a fourth aspect, a system for executing a plurality of concurrent threads comprises: a plurality of context storages, each configured to store a plurality of thread contexts, each thread context for one of a plurality of concurrent threads, each concurrent thread comprising a plurality of operations, each of the plurality of context storages associated with at least one operation of the plurality of operations, wherein at least one context storage of the plurality of context storages comprises a plurality of logical banks, each logical bank uniquely identified by one of a sequence of bank identifiers; a plurality of credit trackers, each associated with one of the plurality of context storages and one of a plurality of identification values; and at least one processing circuitry configured to, while a first thread and a second thread of the plurality of concurrent threads are executed simultaneously by the at least one processing circuitry, both the first thread and the second thread associated with a common identification value: store a first thread context of the first thread in a first bank of a multi-bank context storage of the at least one context storage comprising the plurality of logical banks, the first thread context identified in the multi-bank context storage by the common identification value and a first bank identifier, and consume a credit from a credit tracker associated with the multi-bank context storage and the common identification value; after storing the first thread context, store a second thread context of the second thread in a second bank of the multi-bank context storage, the second thread context identified in the multi-bank context storage by the common identification value and a second bank identifier following the first bank identifier in a cyclic sequence, and consume another credit from the credit tracker; and upon the second thread completing at least one operation associated with the multi-bank context storage, add a new credit to the credit tracker only after the first thread completes said at least one operation.

According to a fifth aspect, a method for executing a plurality of concurrent threads comprises: while a first thread and a second thread of a plurality of concurrent threads are executed simultaneously by at least one processing circuitry, both the first thread and the second thread associated with a common identification value: storing, by the at least one processing circuitry, a first thread context of the first thread in a first bank of a multi-bank context storage of at least one context storage of a plurality of context storages, each of the plurality of context storages configured to store a plurality of thread contexts, each thread context for one of the plurality of concurrent threads, each concurrent thread comprising a plurality of operations, each of the plurality of context storages associated with at least one operation of the plurality of operations, wherein the at least one context storage comprises a plurality of logical banks, each logical bank uniquely identified by one of a sequence of bank identifiers, the first thread context identified in the multi-bank context storage by the common identification value and a first bank identifier, and consuming a credit from a credit tracker associated with the multi-bank context storage and the common identification value; after storing the first thread context, storing a second thread context of the second thread in a second bank of the multi-bank context storage, the second thread context identified in the multi-bank context storage by the common identification value and a second bank identifier following the first bank identifier in a cyclic sequence, and consuming another credit from the credit tracker; and upon the second thread completing at least one operation associated with the multi-bank context storage, adding a new credit to the credit tracker only after the first thread completes said at least one operation.

According to a sixth aspect, a software program product for executing a plurality of concurrent threads comprises: a non-transitory computer readable storage medium; and program instructions for: while a first thread and a second thread of a plurality of concurrent threads are executed simultaneously by at least one processing circuitry, both the first thread and the second thread associated with a common identification value: storing, by the at least one processing circuitry, a first thread context of the first thread in a first bank of a multi-bank context storage of at least one context storage of a plurality of context storages, each of the plurality of context storages configured to store a plurality of thread contexts, each thread context for one of the plurality of concurrent threads, each concurrent thread comprising a plurality of operations, each of the plurality of context storages associated with at least one operation of the plurality of operations, wherein the at least one context storage comprises a plurality of logical banks, each logical bank uniquely identified by one of a sequence of bank identifiers, the first thread context identified in the multi-bank context storage by the common identification value and a first bank identifier, and consuming a credit from a credit tracker associated with the multi-bank context storage and the common identification value; after storing the first thread context, storing a second thread context of the second thread in a second bank of the multi-bank context storage, the second thread context identified in the multi-bank context storage by the common identification value and a second bank identifier following the first bank identifier in a cyclic sequence, and consuming another credit from the credit tracker; and upon the second thread completing at least one operation associated with the multi-bank context storage, adding a new credit to the credit tracker only after the first thread completes said at least one operation; wherein the program instructions are executed by at least one computerized processor from the non-transitory computer readable storage medium.

According to a seventh aspect, a system for executing a plurality of concurrent threads comprises: a plurality of context storages, each configured to store a plurality of thread contexts, each thread context for one of a plurality of concurrent threads, each concurrent thread implementing a common dataflow graph comprising a plurality of operations, where the common dataflow graph comprises a plurality of branches each comprising a subset of the plurality of operations, and where each of the plurality of context storages is associated with at least one operation of the plurality of operations; an identification value allocator; and at least one processing circuitry configured to, while executing a thread of the plurality of concurrent threads: use the identification value allocator to store an association between a first identification value and the first thread; associate each of the plurality of branches of the thread with the first identification value; for each branch of at least one branch of the plurality of branches, store at least one first thread context of the thread in at least one first of the plurality of context storages where the at least one first thread context is identified in the at least one first context storage by the first identification value and where the at least one first context storage is associated with at least one first operation of the subset of operations of the branch; use the identification value allocator to remove the association between the thread and the first identification value and store another association between the thread and a second identification value; associate each of the plurality of branches of the thread with the second identification value; and for each branch of the at least one branch, store at least one second thread context of the thread in at least one second of the plurality of context storages where the at least one second thread context is identified in the at least one second context storage by the second identification value and where the at least one second context storage is associated with at least one second operation of the subset of operations of the branch.

According to an eighth aspect, a method for executing a plurality of concurrent threads comprises: while executing a thread of a plurality of concurrent threads, each concurrent thread implementing a common dataflow graph comprising a plurality of operations, where the common dataflow graph comprises a plurality of branches each comprising a subset of the plurality of operations: use an identification value allocator to store an association between a first identification value and the thread; associate each of the plurality of branches of the thread with the first identification value; for each branch of at least one branch of the plurality of branches, store at least one first thread context of the thread in at least one first context storage of a plurality of context storages, each configured to store a plurality of thread contexts, each thread context for one of the plurality of concurrent threads, where each of the plurality of context storages is associated with at least one operation of the plurality of operations, where the at least one first thread context is identified in the at least one first context storage by the first identification value and where the at least one first context storage is associated with at least one first operation of the subset of operations of the branch; use the identification value allocator to remove the association between the thread and the first identification value and store another association between the thread and a second identification value; associate each of the plurality of branches of the thread with the second identification value; and for each branch of the at least one branch, store at least one second thread context of the thread in at least one second of the plurality of context storages where the at least one second thread context is identified in the at least one second context storage by the second identification value and where the at least one second context storage is associated with at least one second operation of the subset of operations of the branch.

With reference to the first and second aspects, in a first possible implementation of the first and second aspects after storing the second thread context in the second context storage and before completing execution of at least one second operation of the second thread, where the at least one second operation is associated with the second context storage, the outcome of applying the availability test to the identification value indicates that the identification value is not available in the second context storage. Optionally, the at least one processing circuitry is further configured to: while the outcome of applying the availability test to the identification value indicates that the identification value is not available in the second context storage, continue to store the first thread context in the first context storage. Enabling the context of the first thread to wait in the first context storage until its identifier becomes available in the second context storage, maintains execution state while waiting. Optionally, the at least one processing circuitry is further configured to remove the first thread context from the first context storage. Optionally, after storing the first thread context in the first context storage and before removing the first thread context from the first context storage, another outcome of applying another availability test to the identification value indicates that the identification value is not available in the first context storage. Indicating that the identification value is not available in the first context storage prevents other threads from using the same identifier in the first context storage while the first thread's context is still there, maintaining identifier integrity within a single storage. Optionally, the at least one processing circuitry is further configured to, after storing the first thread context in the second context storage: cease to identify the first thread context in the first context storage by the identification value; and when applying another availability test to the identification value, compute another outcome that indicates that the identification value is available in the first context storage. Optionally, each of the plurality of context storages comprises a plurality of context entries, each for storing a plurality of runtime context values of one of the plurality of thread contexts. Optionally, the at least one operation comprises at least one of: a memory access operation, a mathematical operation, executing another computation-graph, an access to a co-processor, and an access to a peripheral device connected to the at least one processing circuitry.

With reference to the first and second aspects, in a second possible implementation of the first and second aspects the first thread context comprises a plurality of context values; and execution of at least one first operation of the first thread comprises modifying at least one other of the plurality of context values stored in the first context storage. Modifying one or more of the plurality of context values when storing a thread context in a context storage, while executing an operation of the thread, tracks execution progress of the thread. Optionally, storing the first thread context in the second context storage comprises modifying at least one of the plurality of context values. Modifying one or more of the plurality of context values when storing the thread context in the next context storage, after the thread completes execution of the operation, enables the thread context to be updated with new values when moving between context storages, reflecting progression of the thread's execution state.

With reference to the first and second aspects, in a third possible implementation of the first and second aspects the plurality of context storages comprises a sequence of context storages comprising the first context storage and an exit context storage, the first context storage has no preceding context storage in the sequence of context storages, the exit context storage has no succeeding context storage in the sequence of context storages, and the at least one processing circuitry is further configured to: before storing the first thread context in the first context storage, store an association between the identification value and the first thread; and after completing execution of the respective at least one operation of the first thread associated with the exit context storage, remove the association between the identification value and the first thread. Optionally, the at least one processing circuitry is further configured to: when a third thread of the plurality of concurrent threads is executed by the at least one processing circuitry simultaneously to executing the first thread and the second thread, store the third thread context in the first context storage where: when another outcome of applying another availability test to the identification value indicates that the identification value is available in the first context storage, the third thread context is identified in the first context storage by the identification value; and when the other outcome of applying the other availability test to the identification value indicates that the identification value is not available in the first context storage, the third thread context is identified in the first context storage by another identification value. Optionally, the at least one processing circuitry is further configured to: after completing execution of the respective at least one operation of the first thread associated with the exit context storage: store a new association between a new identification value and the first thread; and store a new first thread context of the first thread in the first context storage, the new first thread context identified in the first context storage by the new identification value. Optionally, the new first thread context comprises at least some context values from the first thread context. Maintaining some execution state when a thread loops back through the pipeline preserves necessary context between iterations. Assigning a thread a new identifier when looping back through the pipeline increases flexibility in assigning identifiers to threads, increasing utilization of the identifiers, thus increasing utilization of the pipeline.

With reference to the first and second aspects, in a fourth possible implementation of the first and second aspects, each concurrent thread of the plurality of concurrent threads implements a common dataflow graph, where the common dataflow graph comprises the plurality of operations. Implementing a common dataflow graph allows reusing circuitry for operations common among the threads, for example in a reconfigurable circuitry.

With reference to the first and second aspects, in a fifth possible implementation of the first and second aspects the at least one processing circuitry comprises at least one reconfigurable processing grid and the at least one hardware processor is configured to configure the at least one processing grid to execute at least one step that the at least one processing circuitry is configured to perform. Optionally, the at least one reconfigurable processing grid comprises the plurality of context storages. Optionally, the at least one reconfigurable processing grid comprises a plurality of logical elements and the at least one hardware processor is further configured to configure at least some of the plurality of logical elements to implement the respective at least one operation associated with the first context storage.

With reference to the first and second aspects, in a sixth possible implementation of the first and second aspects the at least one processing circuitry comprises testing circuitry for applying the availability test to the identification value. Optionally, the at least one processing circuitry is further configured to: after completing execution of at least one second operation of the second thread: remove the second thread context from the second context storage; and provide the testing circuitry with at least one token value indicating that the identification value is available in the second context storage. Implementing a token-based mechanism for signaling identifier availability between components enables efficient availability tracking, increasing accuracy of identifier use and maintaining integrity of the context storages.

With reference to the first and second aspects, in a seventh possible implementation of the first and second aspects the at least one processing circuitry is further configured to: before storing the first thread context in the first context storage, store in the first context storage a fourth thread context of a fourth thread of the plurality of concurrent threads, the fourth thread context identified in the first context storage by yet another identification value; complete execution of the respective at least one operation associated with the first context storage for the fourth thread before completing execution of the at least one first operation; and store the first thread context in the second context storage while an outcome of applying the availability test to the yet another identification value indicates that the yet another identification value is not available in the second context storage. Out-of-order execution, where a newer thread can progress past an older thread that is blocked, improves overall throughput.

With reference to the first and second aspects, in an eighth possible implementation of the first and second aspects the first context storage has a capacity to store an identified amount of thread contexts; and a total number of concurrent threads in the plurality of concurrent threads executed simultaneously by the at least one processing circuitry exceeds the identified amount of thread contexts. Executing simultaneously by the at least one processing circuitry a total number of concurrent threads that exceeds the capacity of a single context storage increases total throughput and reduces total latency of the plurality of concurrent threads.

With reference to the fourth and fifth aspects, in a first possible implementation of the fourth and fifth aspects the at least one operation comprises at least one of: a memory access operation, a mathematical operation, executing another computation-graph, an access to a co-processor, and an access to a peripheral device connected to the at least one processing circuitry. Optionally, each of the plurality of context storages comprises a plurality of context entries, each for storing a plurality of runtime context values of one of the plurality of thread contexts. Optionally, each concurrent thread of the plurality of concurrent threads implements a common dataflow graph, where the common dataflow graph comprises the plurality of operations.

With reference to the fourth and fifth aspects, in a second possible implementation of the fourth and fifth aspects the system further comprises a plurality of next-write-bank identifiers (write-bank ID), each associated with one of the plurality of identification values and one of the at least one context storages comprising a plurality of logical banks, each write-bank ID identifying one of the plurality of logical banks of the multi-bank context storage associated thereof and configured to advance in a cyclic manner through the sequence of bank identifiers. Optionally, storing a thread context associated with the common identification value in a bank of the plurality of logical banks of the multi-bank context storage comprises identifying the bank according to a write-bank ID of the plurality of write-bank IDs associated with the multi-bank context storage and the common identification value; and advancing the write-bank ID in a cyclic manner. Optionally, the system further comprises a plurality of next-read-bank identifiers (read-bank ID), each associated with one of the plurality of identification values and one of the at least one context storages comprising a plurality of logical banks, each read-bank ID identifying one of the plurality of logical banks of the multi-bank context storage associated thereof and configured to advance in a cyclic manner through the sequence of bank identifiers. Optionally, the at least one processing circuitry is further configured to: identify completing execution for the first thread of the at least one operation when a read-bank ID of the plurality of read-bank IDs associated with the multi-bank context storage and the common identification value identifies the first bank; after identifying completing execution for the first thread of the at least one operation, advance the read-bank ID in a cyclic manner; and after advancing the read-bank ID, identify completing execution for the second thread of the at least one operation when the read-bank ID identifies the second bank. Optionally, the at least one processing circuitry is further configured to, after advancing the read-bank ID, generate a token indicating that the common identification value is available for storing another thread context of another thread associated with the common identification value in the multi-bank context storage. Optionally, adding the new credit to the credit tracker is subject to generating the token.

With reference to the fourth and fifth aspects, or the second implementation of the fourth and fifth aspects, in a third possible implementation of the fourth and fifth aspects the at least one processing circuitry is further configured to, in response to identifying completing execution for the first thread of the at least one operation, when an outcome of applying an availability test to the common identification value indicates that the common identification value is available in another of the plurality of contexts storages, store the first thread context in the other context storage, the first thread context identified in the other context storage by the identification value. Optionally, generating the token is subject to storing the first thread context in the other context storage. Optionally, applying the availability test comprises accessing another credit tracker of the plurality of credit trackers associated with the other context storage and the common identification value.

With reference to the fourth and fifth aspects, in a fourth possible implementation of the fourth and fifth aspects the at least one processing circuitry is further configured to store the first thread context in the first bank subject to identifying that the credit tracker has an available credit. Optionally, the at least one processing circuitry is further configured to: identify that the credit tracker has no available credit after consuming the credit from the credit tracker; and after identifying that the credit tracker has no available credit, identifying another time that the credit tracker has an available credit. Optionally, storing the second thread context in the second bank is subject to identifying that the credit tracker has an available credit the other time. Optionally, each of the plurality of credit trackers comprises a credit counter, consuming the credit from the credit tracker comprises decrementing the credit counter, adding the new credit to the credit tracker comprises incrementing the credit counter, the credit tracker has an available credit when the credit counter has a value greater than zero, and the credit tracker has no available credit when the credit counter has a value equal to zero.

With reference to the fourth and fifth aspects, in a fifth possible implementation of the fourth and fifth aspects each of the plurality of logical banks is configured to store an identified number of thread contexts. Optionally, the sequence of bank identifiers is an ordinal sequence of integer numbers. Optionally, the ordinal sequence of integer numbers starts with zero. Using equally sized logical banks simplifies implementation and tracking of the number of unique thread identifiers that can be used concurrently in the pipeline. Using an ordinal sequence of integer numbers simplifies implementation of identifying the next bank in a cyclic sequence. Using a zero based ordinal sequence of integer allows using modular arithmetic to identify the next bank in a cyclic sequence, further simplifying implementation of identifying the next bank in a cyclic sequence.

With reference to the fourth and fifth aspects, in a sixth possible implementation of the fourth and fifth aspects the multi-bank context storage is implemented using a subset of the plurality of context storages, such that: each bank of the plurality of logical banks of the multi-bank context storage is a context storage of the subset of the plurality of context storages; and each of the subset of the plurality of context storages is associated with the at least one operation.

With reference to the fourth and fifth aspects, in a seventh possible implementation of the first and second aspects the at least one processing circuitry comprises at least one reconfigurable processing grid. Optionally, the at least one reconfigurable processing grid comprises a plurality of logical elements. Optionally, the at least one reconfigurable processing grid comprises the plurality of context storages. Optionally, the at least one reconfigurable processing grid comprises the plurality of credit trackers. Optionally, the system further comprises at least one hardware processor, configured to: configure the at least one processing grid to execute at least one step that the at least one processing circuitry is configured to perform; and configure at least some of the plurality of logical elements to implement the respective at least one operation associated with the multi-bank context storage.

With reference to the fourth and fifth aspects, or the second implementation of the fourth and fifth aspects, in an eighth possible implementation of the first and second aspects the system further comprises an identification value allocator. Optionally, the common dataflow graph comprises a plurality of branches each comprising a subset of the plurality of operations. Optionally, the at least one processing circuitry is further configured to: use the identification value allocator to store an association between the common identification value and the first thread; associate each of the plurality of branches of the first thread with the common identification value; for each branch of at least one branch of the plurality of branches, store at least one thread context of the first thread in at least one first of the plurality of context storages where the at least one thread context is identified in the at least one first context storage by the common identification value and where the at least one first context storage is associated with at least one first operation of the subset of operations of the branch; use the identification value allocator to rename the thread by removing the association between the thread and the common identification value and storing another association between the thread and a new identification value; associate each of the plurality of branches of the first thread with the new identification value; and for each branch of the at least one branch, store at least one other thread context of the thread in at least one second of the plurality of context storages where the at least one other thread context is identified in the at least one second context storage by the new identification value and where the at least one other context storage is associated with at least one second operation of the subset of operations of the branch. Optionally, the plurality of context storages comprises, for at least one branch of the plurality of branches, a sequence of context storages comprising the at least one first context storage and at least one exit context storage. Optionally, the at least one first context storage has no preceding context storage in the sequence of context storages, the at least one exit context storage has no succeeding context storage in the sequence of context storages, and the at least one processing circuitry executes the first thread in each of a plurality of iterations. Optionally, the at least one processing circuitry is further configured to: store the at least one thread context of the first thread in the at least one first context storage in a first iteration of the plurality of iterations; rename the first thread after completing execution of the respective at least one operation of the first thread associated with the exit context storage; and store the at least one other thread context of the first thread in the at least one second context storage in a second iteration of the plurality of iterations, where the second iteration occurs after the first iteration. Optionally, the plurality of operations comprises a first group of operations and a second group of operations, where the first group of operations precedes the second group of operations in the common dataflow graph, the at least one first operation is a member of the first group of operations and the at least one first context storage is a member of a first group of context storages of the plurality of context storages, each associated with at least one of the first group of operations, the at least one second operation is a member of the second group of operations and the at least one second context storage is a member of a second group of context storages of the plurality of context storages, each associated with at least one of the second group of operations, and the first group of operations is organized in a sequence of context storages comprising at least one exit context storage having no succeeding context storage in the sequence of context storages. Optionally, the at least one processing circuitry is further configured to rename the first thread after completing execution of the respective at least one operation of the first thread associated with at least one exit context storage.

With reference to the fourth and fifth aspects, or the second and eighth implementations of the fourth and fifth aspects, in a ninth possible implementation of the first and second aspects the plurality of branches comprises a master branch. Optionally, the at least one processing circuitry is further configured to associate each of the plurality of branches of the first thread with the new identification value comprising associating the master branch with the new identification value, and the master branch is configured to, in response to being associated with the new identification value, deliver the new identification value to at least one other branch of the plurality of branches.

With reference to the fourth and fifth aspects, or the second and eighth implementations of the fourth and fifth aspects, in a tenth possible implementation of the first and second aspects the system further comprises gatekeeper circuitry. Optionally, the at least one processing circuitry is further configured to associate each of the plurality of branches of the first thread with the new identification value comprising providing the gatekeeper circuitry with the new identification value, and the gatekeeper circuitry is configured to, in response to receiving the new identification value, deliver the new identification value to all the branches of the plurality of branches.

Other systems, methods, features, and advantages of the present disclosure will be or become apparent to one with skill in the art upon examination of the following drawings and detailed description. It is intended that all such additional systems, methods, features, and advantages be included within this description, be within the scope of the present disclosure, and be protected by the accompanying claims. In addition, the various aspects, embodiments, implementations, features, and components described herein may be combined in any suitable manner. Each aspect may be practiced independently or in combination with one or more other aspects.

Unless otherwise defined, all technical and/or scientific terms used herein have the same meaning as commonly understood by one of ordinary skill in the art to which embodiments pertain. Although methods and materials similar or equivalent to those described herein can be used in the practice or testing of embodiments, exemplary methods and/or materials are described below. In case of conflict, the patent specification, including definitions, will control. In addition, the materials, methods, and examples are illustrative only and are not intended to be necessarily limiting.

### BRIEF DESCRIPTION OF THE SEVERAL VIEWS OF THE DRAWING(S)

Some embodiments are herein described, by way of example only, with reference to the accompanying drawings. With specific reference now to the drawings in detail, it is stressed that the particulars shown are by way of example and for purposes of illustrative discussion of embodiments. In this regard, the description taken with the drawings makes apparent to those skilled in the art how embodiments may be practiced.

In the drawings:
FIGs. 1A, 1B and 1C are schematic block diagrams of an exemplary processing framework, as known in the art;
FIGs. 2A, 2B, 2C, 2D, and 2E are schematic block diagrams of another exemplary processing framework, as known in the art;
FIGs. 3A, 3B, 3C, 3D, 3E and 3F are schematic block diagrams of an exemplary processing framework with context storages and reusable thread identification values, according to some embodiments;
FIG. 4 is a schematic block diagram of an exemplary system, according to some embodiments;
FIG. 5 is a schematic block diagram of another exemplary system, according to some embodiments;
FIG. 6 is a sequence diagram of an optional flow of operations, according to some embodiments;
FIG. 7 is a sequence diagram of another optional flow of operations, according to some embodiments;
FIG. 8 is a sequence diagram of yet another optional flow of operations, according to some embodiments;
FIG. 9 is a flowchart of an additional other optional flow of operations, according to some embodiments;
FIG. 10 is a schematic block diagram of an exemplary system using multi-bank context storages, according to some embodiments;
FIGs. 11A, 11B, 11C and 11D are schematic block diagrams of an exemplary processing framework with multi-bank context storages and reusable thread identification values, according to some embodiments;
FIG. 12 is a flowchart of an optional flow of operations for using a multi-bank context storage, according to some embodiments;
FIG. 13 is a flowchart of an optional flow of operations for storing contexts in a multi-bank context storage, according to some embodiments;
FIG. 14 is a schematic block diagram of an exemplary system with an identification value allocator, according to some embodiments;
FIGs. 15A, 15B, 15C and 15D are schematic block diagrams of an exemplary processing framework with an identification value allocator, according to some embodiments; and
FIG. 16 is a flowchart of an optional flow of operations for using an identification value allocator, according to some embodiments.

### DETAILED DESCRIPTION

A challenge in managing parallel threads in a computation pipeline arises when threads encounter operations with inconsistent execution times. For example, memory access operations may take varying amounts of time depending on cache hits or misses. When a thread encounters such an operation, it may be suspended to allow other threads to utilize the computation resources. This requires storing the thread's context until it can resume execution.

In the field of computer programming, the term "context" refers to a state that exists when executing an operation. With regards to a thread, a thread's context is a set of values accessible by the thread when executing an operation. When the thread is executed by a central processing unit (CPU), the thread's context includes, among other values, a plurality of values of a plurality of registers of the CPU, one or more values of a Thread Local Storage (TLS), a plurality of values of a stack memory and a program counter value. As used herein, the term "thread context" refers to the information needed to resume execution of a suspended thread. Some examples of thread context include register values, program counter, and thread state information.

In the following description, various approaches to thread context management will be illustrated using frameworks with some common elements. Each example will show a plurality of concurrent threads executing a plurality of operations organized in a processing pipeline. The plurality of operations are executed sequentially within each concurrent thread, where a thread first executes a first operation, then a second operation, and so on.

While the specific implementation and flow of operations differs between the various approaches (as will be shown in the following figures), the fundamental challenge remains the same: how to efficiently manage thread execution and context storage when threads encounter operations with inconsistent execution times. Similar reference numbers were used to indicate the threads and operations among the figures.

It should be noted that for simplicity, each of the plurality of operations depicted in the following examples may each be a group of operations, and each may be organized in a sub-pipeline of the original pipeline. However, to simplify the explanations, the present disclosure refers to each in the singular. In addition, an operation may be a No Operation (NOP), for example when serving as a delay buffer.

Traditional approaches to thread context management have significant limitations. One approach uses first-in-first-out (FIFO) queues at each computation element. While efficiently using memory resources, this approach forces threads to execute in-order, limiting performance when threads encounter high-latency operations.

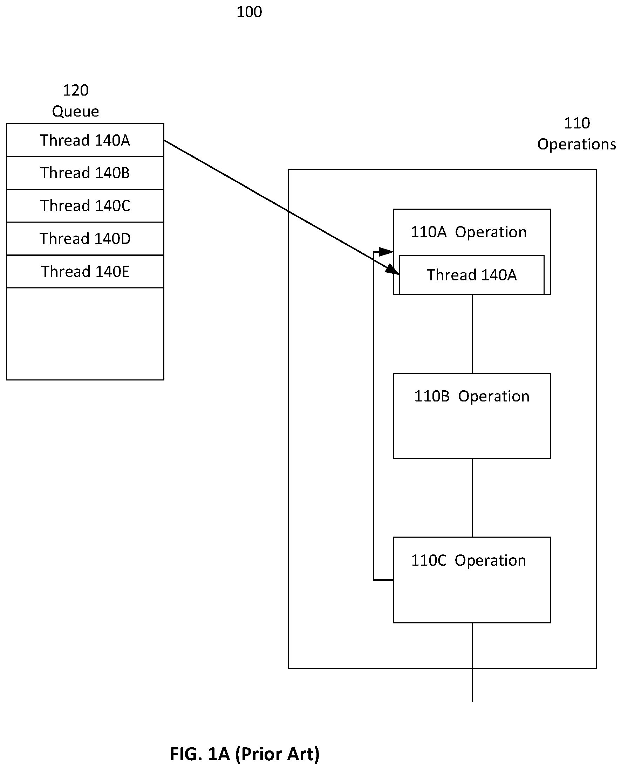

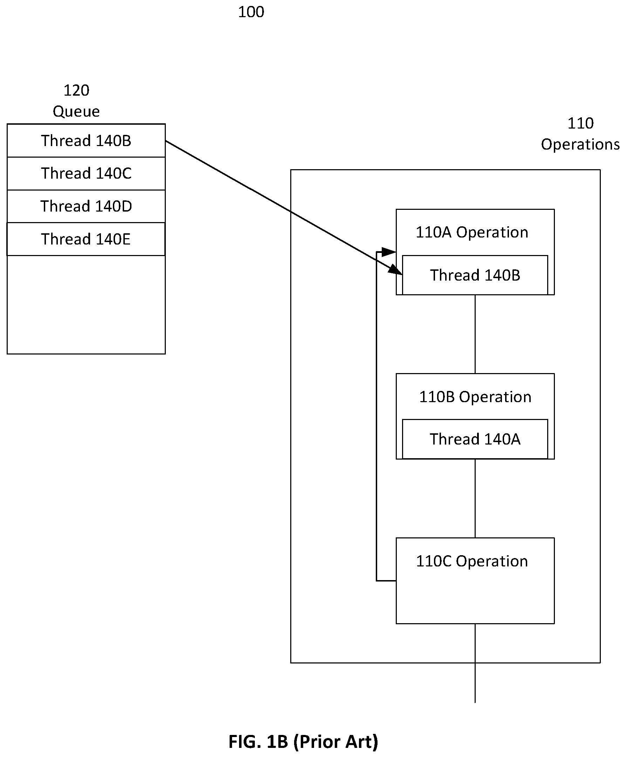

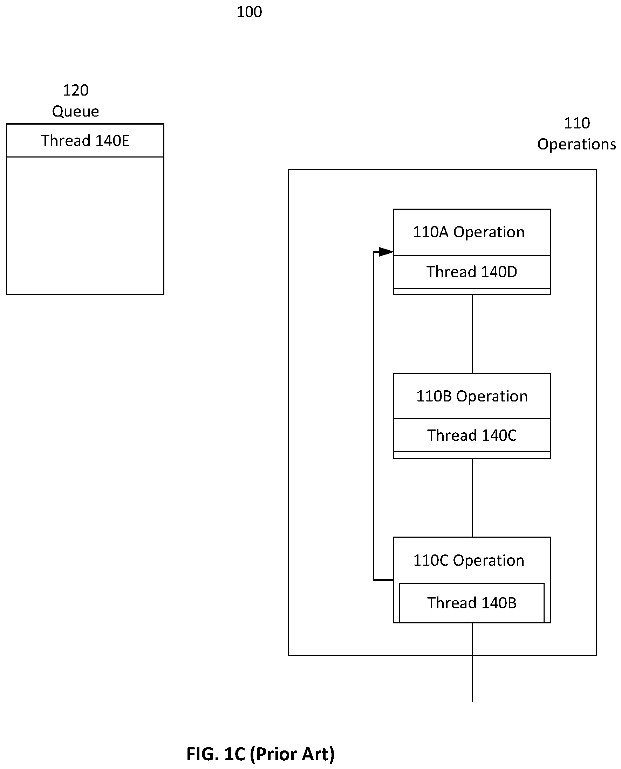

Reference is now made to FIGs. 1A, 1B and 1C showing schematic block diagrams of an exemplary processing framework 100 that uses a FIFO approach. Referencing FIG. 1A, in this example a plurality of concurrent threads includes thread 140A, thread 140B, thread 140C, thread 140D and thread 140E, referred to collectively as plurality of concurrent threads 140. Optionally, the plurality of threads are organized in queue 120. Optionally, each of the plurality of concurrent threads 140 comprises a plurality of operations 110, optionally, comprising operation 110A, operation 110B and operation 110C. Optionally, plurality of operations 110 are organized in a pipeline where a thread executes operation 110A, then executes operation 110B and then operation 110C.

For example, thread 140A may start to execute pipeline 110, for example executing operation 110A. Referencing also FIG. 1B, when thread 140A completes execution of operation 110A thread 140A may move to execute operation 110B, allowing thread 140B to now execute operation 110A. As long as thread 140A has not completed executing operation 110B, thread 140B cannot move on from operation 110A to operation 110B and thread 140C cannot start executing. Referencing also FIG. 1C, only after thread 140A completes executing pipeline 110 thread 140D can start executing operation 110A. When a thread executes pipeline 110 in a loop (for example after operation 110C returning to operation 110A), the thread must join queue 120 again and wait until the threads before it in the queue complete executing pipeline 110. This mechanism forces the plurality of threads 140 to execute in a strict order. As a result, when one thread encounters latency, all other threads following it suffer that latency. For example, when thread 140A encounters latency in executing operation 110A, thread 140B is delayed by that latency, unable to start execution of operation 110A until thread 140A completes executing that operation.

It should be noted that for simplicity, operation 110A, operation 110B, and operation 110C may each be a group of operations, and each may be organized in a sub-pipeline of pipeline 110. However, to simplify the explanations, the present disclosure refers to each in the singular. In addition, an operation may be a No Operation (NOP), for example when serving as a delay buffer.

Another approach assigns each of the plurality of concurrent threads 140 an identifier that is unique throughout the pipeline 110, and allows out-of-order execution by using context storage to store a context of a thread executing an operation that has not completed and reuse resources that were used to execute the operation to execute an operation of another thread.

As used herein, the term "context storage" refers to a component configured to store thread contexts for threads being processed by a computation element. A context storage may be implemented in hardware, software, or a combination thereof. The following description focuses on context storage implemented mostly in hardware, but is not limited to such solutions. In addition, unless otherwise noted, for brevity herewithin the term "context" is used to mean "thread context" and the terms are used interchangeably. A runtime context value of a thread is a value accessible to the thread while the thread is executing. Optionally, a thread context comprises a set of runtime context values, and the term "thread context" as used herein refers to information needed to resume execution of a suspended thread, including, but not limited to, register values, program counter, thread state information, and other thread-specific data.

There exist solutions where each of the plurality of operations 110 is associated with one of a plurality of context storages. Each context storage is configured to store a plurality of thread contexts, where each thread context corresponds to one of the plurality of concurrent threads 140, and a thread context of a thread is stored in a context storage for each thread executing the operation associated with the context storage while the operation has not completed for the thread. In each context storage, the context of a thread is identified by the unique identifier assigned to the thread. One such solution is described in US patent 11,875,153 issued 16-Jan-2024 (Raz et al.).

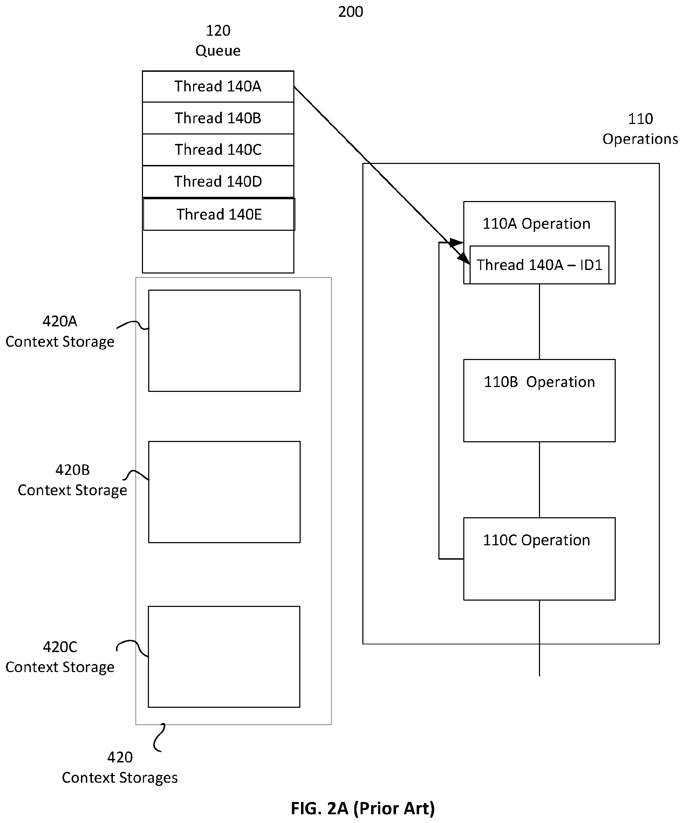

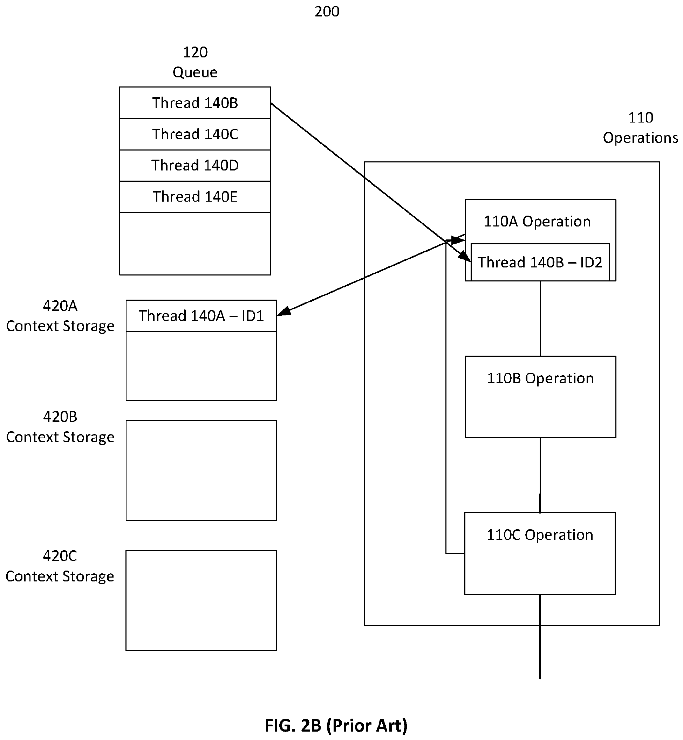

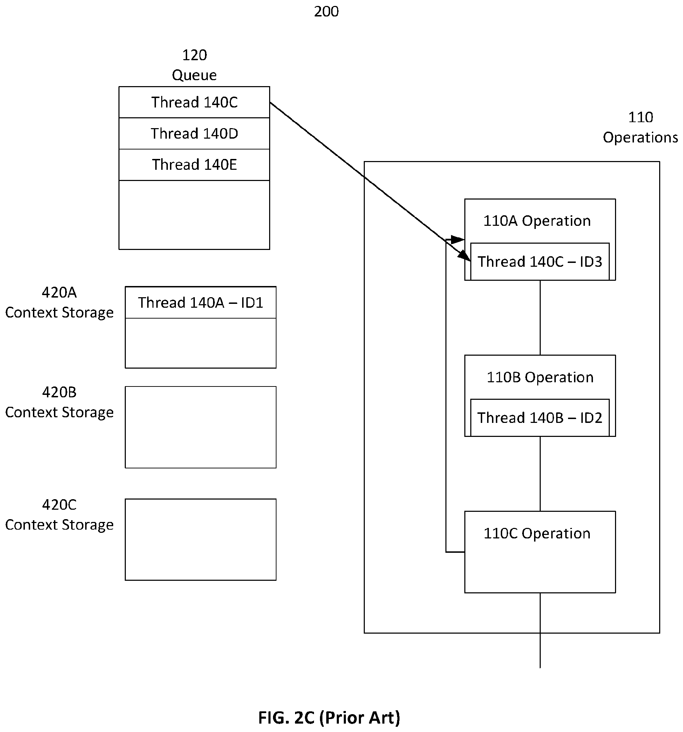

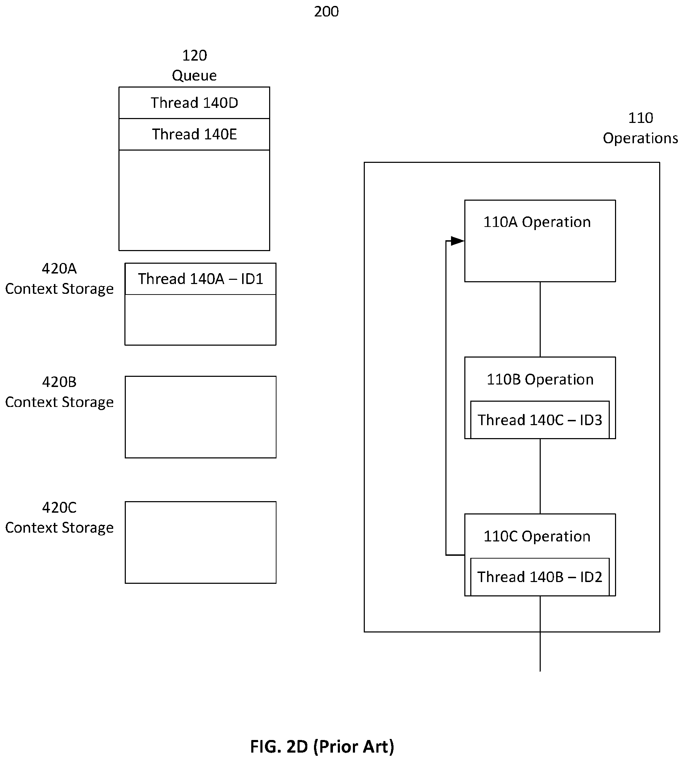

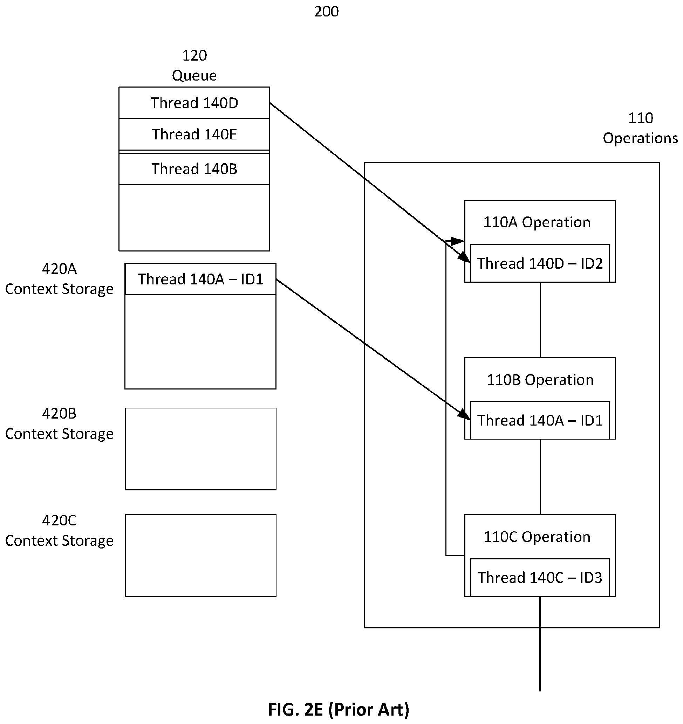

Reference is now made also to FIGs. 2A, 2B, 2C, 2D, and 2E, showing schematic block diagrams of another exemplary processing framework 200, using thread identification values to allow out of order thread execution. Referencing also FIG. 2A, there exist solutions where each of the plurality of operations 110 is associated with one of a plurality of context storages comprising context storage 420A, context storage 420B and context storage 420C (referred to collectively as plurality of context storages 420). In this example, operation 110A is associated with context storage 420A, operation 110B is associated with context storage 420B and operation 110C is associated with context storage 420C. Optionally, a context storage of plurality of context storages 420 is used to store a thread context of each of the plurality of concurrent threads 140 while waiting for completion of execution of the one or more operations associated with the context storage, for the thread. For example, context storage 420A is configured to store one or more thread contexts of one or more of the plurality of concurrent threads 140 while waiting for completion of executing operation 110A for said one or more threads. Similarly, in this example context storage 420B is configured to store one or more thread contexts of threads waiting completion of execution of operation 110B and context storage 420C is configured to store one or more thread contexts of threads waiting completion of execution of operation 110C.

For brevity, henceforth the term ID is used to mean "thread identification value", thus ID 1 is "thread identification value 1", "ID 2" is "thread identification value 2" etc. In this solution, when starting execution of pipeline 110, thread 140A is assigned identifier ID 1. In addition, for simplicity operation 110A, operation 110B and operation 110C are each referred to in the singular but may comprise more than one operation of the plurality of operations 110. Referencing also FIG. 2B, while waiting for completion of execution of operation 110A for thread 140D, a context of thread 140A is stored in context storage 420A, associated with operation 110A. In context storage 420A the context of thread 140A is identified by ID 1, associated with thread 140A. Meanwhile, thread 140B may execute operation 110A, with thread 140B being assigned the identifier ID 2.

Referencing also FIG. 2C, thread 140B may complete executing operation 110A and move on to execute operation 110B, with thread 140C, assigned the identifier ID 3, starting execution of operation 110A. All this time, thread 140A may be waiting completion of operation 110A, with thread 140A's context stored in context storage 140A.

Since in such a solution a thread's context is identified by the identifier assigned to the thread and the identifier is unique in the pipeline, the number of threads that can execute concurrently in the pipeline 110 is limited by the number of possible unique identifiers, and each context storage must be able to store a context for all possible threads. Thus, the number of threads that can execute concurrently in the pipeline 110 is limited by the number of contexts that can be stored in a single context storage. In this example, each context storage can store up to three contexts. Thus, once thread 140A, thread 140B and thread 140C are executing concurrently in pipeline 110, thread 140D cannot start executing until one of these three completes executing the pipeline 110. Referencing also FIG. 2D, because thread 140A still has not completed operation110A, there is no free identifier to assign to thread 140D and thus resources dedicated to executing operation 110A may remain idle. Furthermore, context storage 420B and context storage 420C, as well as part of context storage 420A, remain unused so long as other threads do not encounter long latencies in their execution.

Referencing also FIG. 2E, when thread 140B completes executing the pipeline (and optionally returns to queue 120 for another iteration), ID 2 is released and may be assigned to thread 140D. Then thread 140D may execute operation 110A. When thread 140C completes executing operation 110B, thread 140C may move on to execute operation 110C, and now when thread 140A completes execution of operation 110A thread 140A may execute operation 110B.

This approach requires larger context storage at each computation element to accommodate all possible threads, possibly resulting in inefficient use of silicon real estate because some storage entries may remain unused at any given time. Furthermore, this approach limits the maximum number of concurrent threads to the number of unique identifiers available, which in turn is limited by the size of a context storage.

There is a need for a thread management system that enables out-of-order execution while efficiently utilizing context storage resources and supporting a larger number of concurrent threads.

The present disclosure, in at least some embodiments thereof, addresses the technical problem of increasing the number of concurrent threads executing in an execution pipeline of a plurality of operations. In addition, in some embodiments, the present disclosure further optimizes the use of context storage resources for out-of-order execution capabilities. To do so, in some embodiments described herewithin, when a thread enters the pipeline, the thread is assigned an identifier that identifies the thread's context in a context storage associated with a first operation in the pipeline, however the identifier may not be unique throughout the pipeline but rather can be used in another context storage associated with a different operation. Compared to the solution described above that uses unique identifiers throughout the pipeline, some embodiments described herewithin allow reducing the amount of context storage resources required to execute a given number of threads concurrently. Additionally, some embodiments allow using a given amount of context storage resources to execute concurrently more threads than possible according to the solution described above that uses unique identifiers, thus increasing throughput and additionally or alternatively reducing latency of executing the plurality of concurrent threads compared to an implementation that uses unique identifiers. In such embodiments, the maximum number of concurrent threads executable by the system is not constrained by the capacity of any individual context storage, for example as in the solution described above, but rather relates to the aggregate capacity of the plurality of context storages.

It should be noted that in the following descriptions, the descriptions focus on moving thread contexts from one context storage to another when the associated thread completes execution of an operation. However, there are other possible implementation such as to move a thread context from one context storage to another when the thread context is no longer needed for an operation associated with the one thread context, for example when waiting for an outcome of executing the operation. To keep the description simpler, the following descriptions refer to "when a thread completes an operation associated with a thread context", and not to "when a thread context is no longer needed by an operation associated with the context storage storing the thread context", but it should be emphasized that the latter term may replace the former term.

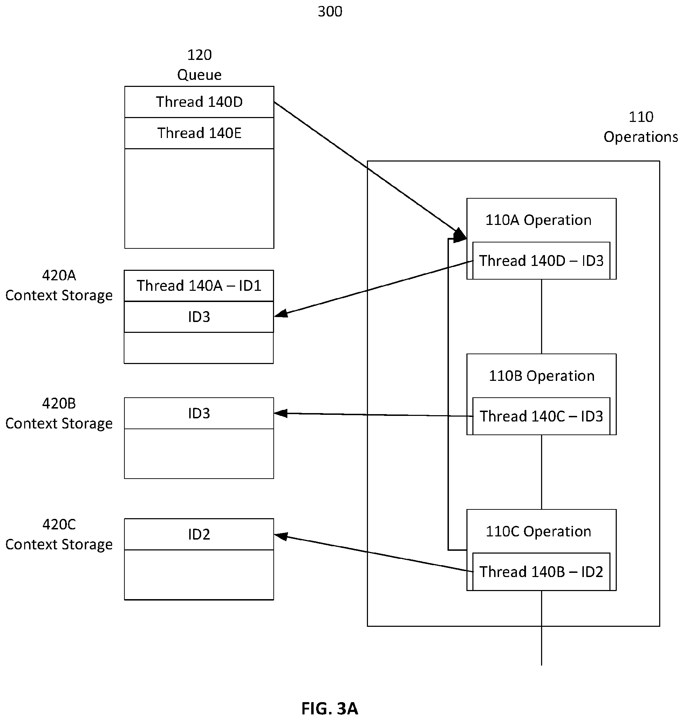

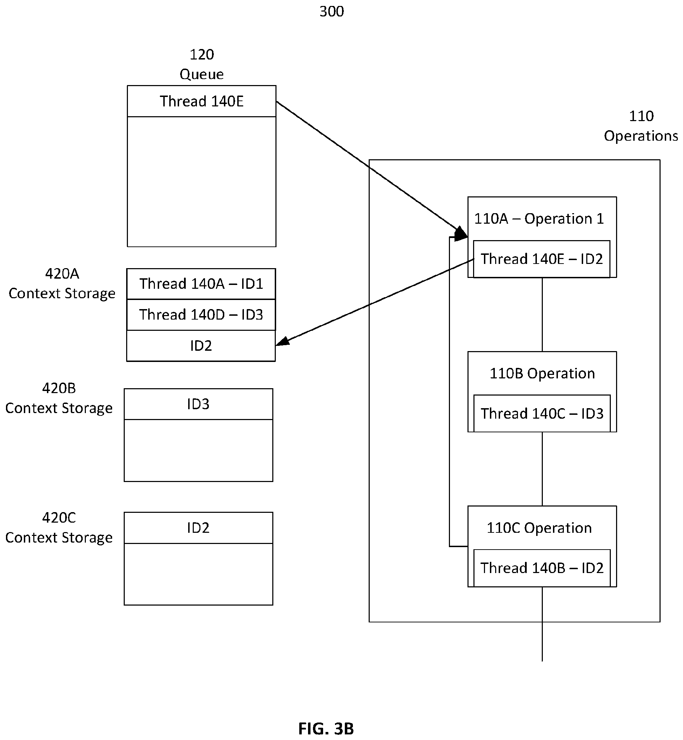

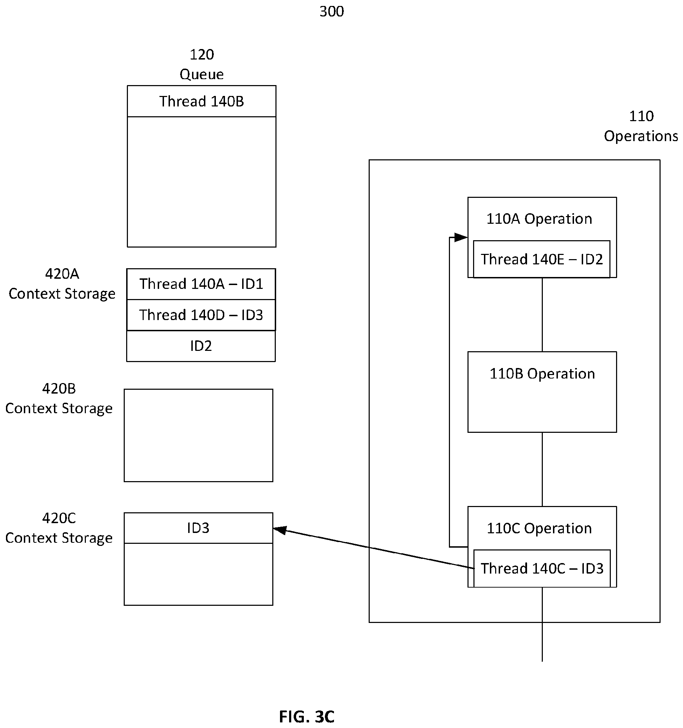

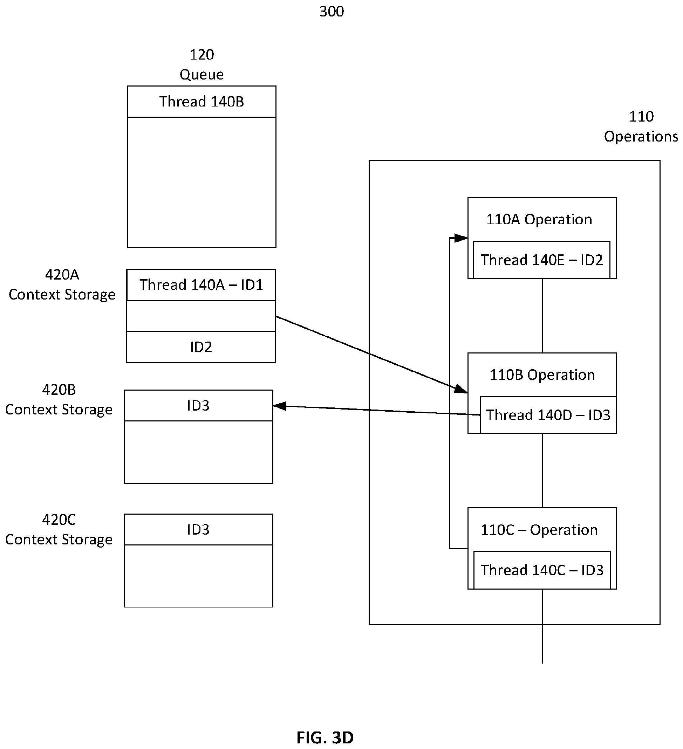

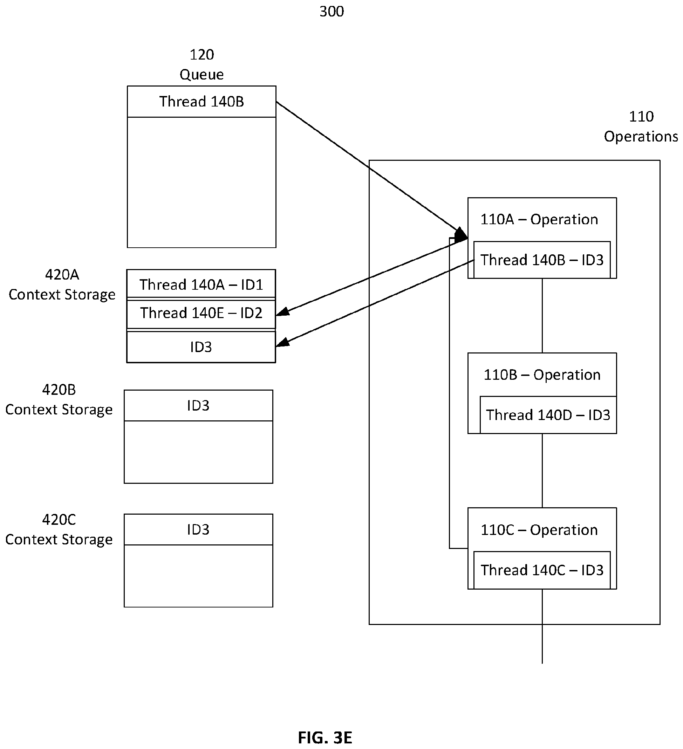

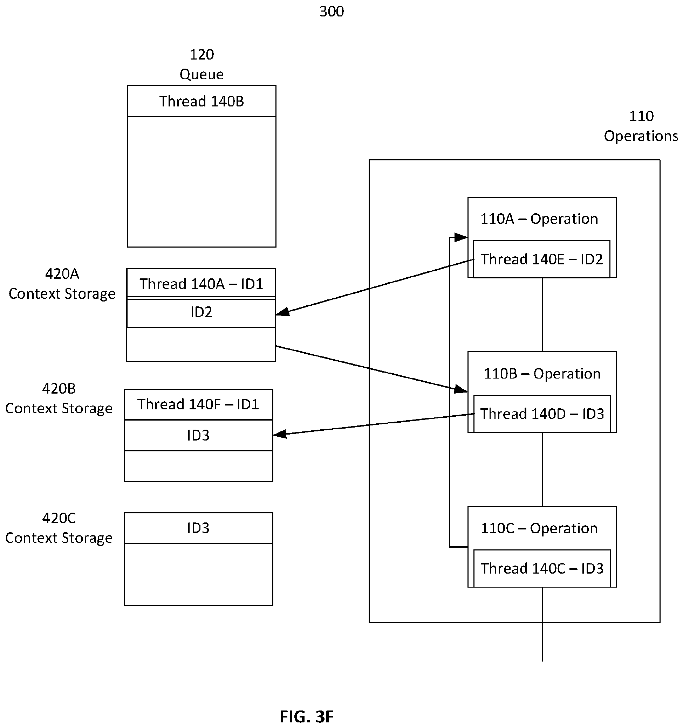

Reference is now made also to FIGs. 3A, 3B, 3C, 3D, 3E and 3F, showing schematic block diagrams of an exemplary processing framework 300 with context storages and reusable thread identification values, according to some embodiments. Referring again to FIG. 2D, in existing solutions as depicted in this figure, using identifiers that are unique throughout the pipeline prevented thread 140D from executing operation 110A as long as thread 140A, thread 140B and thread 140C were all executing concurrently in pipeline 110.

Referencing also FIG. 3A, context storage 420A that is associated with operation 110A is storing at this point only the thread context of thread 140A, identified by ID 1. ID 2 and ID 3 are available in context storage 420A, even though they are assigned to thread 140B and 140C respectively, which are executing operation 110C and operation 110B respectively.

According to some embodiments, since ID 3 is available in context storage 420A thread 140D can be associated with ID 3 and start execution of operation 110A. At this point, in this example ID 3 becomes unavailable in context storage 420A. Optionally, this is by storing the context of thread 140D in context storage 420A, identified by ID 3. Optionally, this is by marking in context storage 420A that ID 3 is not available.

Now in this example, pipeline 110 is executing concurrently four threads, namely thread 140B on operation 110C, thread 140C on operation 110B, thread 140D on operation 110A and thread 140A waiting for completion of operation 110A. However, only three identifiers are in use, namely ID 1, ID 2, and ID 3. Since thread 140D is associated with context storage 420A (through operation 110A) and thread 140C is associated with context storage 420B (through operation 110B) there is no conflict between them as they are associated with different context storages.

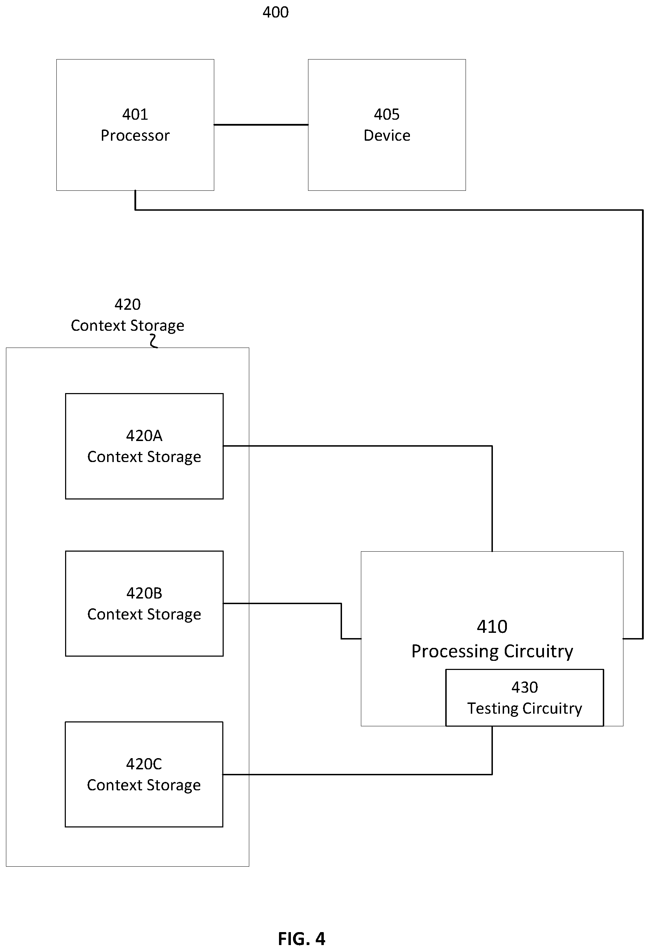

Optionally, at least one operation of the plurality of operations comprises a memory access operation. Optionally, at least one operation of the plurality of operations comprises a mathematical operation. Some examples of a mathematical operation include, but are not limited to, a floating-point mathematical operation, a fixed-point mathematical operation, and integer mathematical operation and a Boolean mathematical operation. Optionally, at least one operation of the plurality of operations comprises executing another computation graph. Optionally, executing the other computation-graph can be as a result of executing a control-flow instruction. Some examples of a control-flow instruction include, but are not limited to, a jump instruction, a branch instruction, a function call instruction and a conditional switch instruction. Optionally, at least one operation of the plurality of operations comprises an access to a peripheral device 405 connected to processing circuitry 410 (Fig. 4). Some examples of a peripheral device include, but are not limited to, a sensor, an input device, a storage device and a network interface.

Again, as noted above, each of operation 110A, operation 110B and operation 110C may be a group of operations, organized in a sub-pipeline of pipeline 110. It may be that more than one thread is executing simultaneously operation 110A, in a pipeline. However, each of the plurality of operations 110 has at least one operation with an unpredictable latency, and for the simplicity of the description the present disclosure uses the terms "operation 110A", "operation 110B" and operation "110C" to refer to the at least one operation with unpredictable latency in the group of operations.

Referencing also FIG. 3B, while thread 140D is waiting for completion of operation 110A its storage is stored in context storage 420A. Thread 140E may be associated with ID 2 that is available in context storage 420A and may execute operation 110A. Now in this example pipeline 110 is executing concurrently five threads, namely thread 140B on operation 110C, thread 140C on operation 110B, thread 140E on operation 110A and thread 140A and thread 140D waiting for completion of operation 110A, while still using only three identifiers. At this point, in this example ID 2 becomes unavailable in context storage 420A. Optionally, this is by storing the context of thread 140E in context storage 420A, identified by ID 2. Optionally, this is by marking in context storage 420A that ID 2 is not available.

Referencing also FIG. 3C, after thread 140C completes execution of operation 110C, since ID 3 is available in context storage 420C thread 140C may execute operation 110C, at which point ID 3 becomes unavailable in context storage 420C. In addition, ID 3 becomes available in context storage 420B.

Referencing also FIG. 3D, since ID 3 has become available in context storage 420B thread 140D may execute operation 110B. At this point, ID 3 again becomes unavailable in context storage 420B. In addition, ID 3 becomes available in context storage 420A. When thread 140B executes pipeline 110 in a loop in a plurality of iterations, after executing operation 110C thread 140B may return to queue 120.

Referencing also FIG. 3E, while thread 140E is awaiting completion of execution of operation 110A, the context of thread 140E is stored in context storage 420A, identified by ID 2. Since ID 3 is available in context storage 420A thread 140B may execute 110A again, this time with thread 140B associated with ID 3 (whereas in its previous iteration in pipeline 110 thread 140B was associated with ID 2). At this point ID 3 becomes unavailable in context storage 420A.

In some embodiments the present solution allows out of order execution of threads that have different identifiers, while threads that share a common identifier execute in order. Reference is now made also to FIG. 3F. In this example, thread 140F is associated with ID 1 and its context is stored in context storage 420B that is associated with operation 110B. Thread 140A may complete execution of operation 110A, however since ID 1 is not available in context storage 420B thread 140A cannot execute operation 110B. Instead, thread 140D, associated with ID 3, may free context storage 420A and execute operation 110B, at which point ID 3 becomes unavailable in context storage 420B. In this example, thread 140F and thread 140A which are both associated with a common identifier ID 1 execute in order, whereas thread 140D and thread 140A that are associated with different identifiers may execute out of order, with thread 140D progressing through pipeline 110 before thread 140A even though thread 140D started execution after thread 140A.

Other solutions that use buffering for reordering threads using unique identification values for the threads require at each operation an amount of buffering that can support the latency of the entire FIFO 110. The present solution has an advantage over such solutions as it allows, in some embodiments thereof, using a context storage that supports the latency of one operation only, reducing the amount of memory required to implement the plurality of context storages.

A key challenge in out of order execution within a pipeline of operations is maintaining the original order of execution of threads when they exit the pipeline. When threads have different identifiers, the order of the identifiers may be tracked and the order of the threads may be restored outside the pipeline. However, there still remains the challenge of maintaining the original order of execution of threads sharing a common identifier when they exit the pipeline.

The solution as described above prevents out of order execution of threads that share a common identifier by storing in a context storage associated with at least one operation at most one thread at a time for each thread identifier. As described above, again referencing FIG. 3F, while ID 1 is not available in context storage 420B thread 140A cannot execute operation 110B. This can happen, for example, when a latency of operation 110B is greater than the amount of time required for a number of threads whose context is stored in context storage 420A to execute operation 110A. For example, when execution of operation 110A requires a number of system ticks and context storage 420A can store a number of thread contexts, if the latency of operation 110B is greater than the number of system ticks multiplied by the number of thread contexts then ID 1 may remain unavailable in context storage 420B when thread 140A completed executing operation 110A but thread 140F has not completed executing operation 110B.

In addition, the present disclosure, in some other embodiments, proposes using context storages with a plurality of logical banks, such that a context storage may store simultaneously more than one thread context having a common identifier, each of the more than one thread context stored in one of the plurality of logical banks. In such embodiments, a logical bank stores at a given time at most one thread context identified by an identifier, however the plurality of logical banks combined store in the context storage simultaneously more than one thread context identified by the common identifier. This allows a plurality of threads associated with the common identifier to execute at least one operation in the pipeline out of order, further increasing the number of threads executing concurrently in the pipeline, reducing total latency of executing the plurality of concurrent threads.

Optionally, the plurality of context storages 420 are distributed among the plurality of operations 110, for example according to anticipated latency of each of the plurality of operations 110. In such embodiments, a plurality of logical banks of a context storage may be implemented by associating at least one operation of plurality of operations 110 with more than one context storage to serve as a single logical context storage, or a combined context storage, such that each of the associated context storages serves as a logical bank of the combined context storage.

Further in such other embodiments, the present disclosure proposes using a credit-based management to manage storing the more than one thread context in the plurality of logical banks, such that execution order of threads having a common identifier is preserved. For example, in some embodiments, a credit tracker may be a counter associated with a context storage and an identification value, counting how many thread contexts sharing the identification value can be written to the context storage, for example in how many of the plurality of logical banks the identification value is still available.

In addition, when the plurality of concurrent threads implement a common dataflow graph, the common dataflow graph may have a plurality of branches, each comprising a subset of the plurality of operations 110. Optionally, for a thread associated with an identification value, each of the plurality of branches of the thread are associated with the identification value. When the thread exits the pipeline, the thread may be assigned a new identification value. This may be before executing the pipeline again, in another iteration of a plurality of iterations. This may be before entering another pipeline. Optionally, this is done while the thread is executing the plurality of operations 110. There is a need to associate all the branches of the thread with the new identification value. To do so, in some embodiments described herewithin, the present disclosure proposes that a master branch of the plurality of branches deliver to each of the plurality of branches the new identification value when the master branch is associated with the new identification value. Optionally, the present disclosure proposes that a gatekeeper circuitry delivers the new identification value to each of the plurality of branches. Having a master branch that delivers the new identification value to the plurality of branches reduces the need for a gatekeeper circuitry external to the thread to be aware of all the branches of the thread, however increases complexity of implementation of the thread. On the other hand, using a gatekeeper circuitry simplifies implementation of the thread, but requires external tracking of the plurality of branches of the thread and the relationship between them, increasing complexity of management circuitry that is external to the functional circuitry executing the thread.

Using renaming in combination with multi-bank context storages further increases the flexibility of identifier assignment. When a thread completes execution through a sequence of operations and is renamed, the new identification value can be assigned independently of the thread's previous identification value, allowing even greater utilization of the multi-bank context storages throughout the pipeline. Additionally, or alternatively, using renaming in combination with multi-bank context storages further increases flexibility of controlling synchronization between the plurality of branches of a thread, while increases optimization of context storage resources use. Optionally, one or more multi-bank context storages are used in one or more of the plurality of branches and not in one or more other of the plurality of branches. This allows out of order execution of threads associated with a common identifier in some operations of the one or more branches while preserving their order of execution throughout the one or more other branches. This provides the advantage of increasing total throughput by reducing total latency in the one or more branches that allow out of order execution of threads associated with a common identifier while reducing an amount of resources used in total by not using multi-bank context storage in the one or more other branches.

Before explaining at least one embodiment in detail, it is to be understood that embodiments are not necessarily limited in its application to the details of construction and the arrangement of the components and/or methods set forth in the following description and/or illustrated in the drawings and/or the Examples. Implementations described herein are capable of other embodiments or of being practiced or carried out in various ways.

Embodiments may be a system, a method, and/or a computer program product. The computer program product may include a computer readable storage medium (or media) having computer readable program instructions thereon for causing a processor to carry out aspects of the embodiments.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of embodiments may be assembler instructions, instruction-set-architecture (ISA) instructions, machine instructions, machine dependent instructions, microcode, firmware instructions, state-setting data, or either source code or object code, natively compiled or compiled just-in-time (JIT), written in any combination of one or more programming languages, including an object oriented programming language such as Smalltalk, C++, Java, Object-Oriented Fortran or the like, an interpreted programming language such as JavaScript, Python or the like, and conventional procedural programming languages, such as the "C" programming language, Fortran, or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), a coarse-grained reconfigurable architecture (CGRA), or programmable logic arrays (PLA) may execute the computer readable program instructions by utilizing state information of the computer readable program instructions to personalize the electronic circuitry, in order to perform aspects of embodiments.

Aspects of embodiments are described herein with reference to flowchart illustrations and/or block diagrams of methods, apparatus (systems), and computer program products according to embodiments. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

Reference is now made also to FIG. 4, showing a schematic block diagram of an exemplary system 400, according to some embodiments. In such embodiments, at least one hardware processor 401 is connected to one or more processing circuitry 410. Some examples of a processing circuitry include, but are not limited to, a central processing unit (CPU), a data processing unit (DPU), a multi-core central processing unit (multi-core CPU), a microcontroller unit (MCU), an accelerated processing unit (ACU), a field-programmable gate array (FPGA), a coarse-grained reconfigurable architecture (CGRA), a neural-network accelerator, an intelligence processing unit (IPU), an application-specific integrated circuit (ASIC), a quantum computer, a superscalar processor and a hyperthreading processor.

Optionally, plurality of context storages 420 is connected to one or more processing circuitry 410. For brevity, henceforth the term "processing unit" is used to mean at least one hardware processor and the terms are used interchangeably. The processing unit may be any kind of programmable or non-programmable circuitry that is configured to carry out the operations described above and below. The processing unit may comprise hardware as well as software. For example, the processing unit may comprise one or more processors and a transitory or non-transitory memory that carries a program which causes the processing unit to perform the respective operations when the program is executed by the one or more processors.

Optionally, each of plurality of context storages 420 is configured to store a plurality of thread contexts. Optionally each thread context of the plurality of thread contexts is for one of plurality of concurrent threads 140. Optionally, each of the plurality of context storages 420 comprises a plurality of context entries. Optionally, each context entry of the plurality of context entries is for storing a plurality of runtime context values of one of the plurality of thread contexts stored in the context storage. Optionally the plurality of context entries are organized in an array. Optionally, the plurality of context entries are organized in a hash table. Optionally the plurality of context entries are indexed by a thread identification value.

Optionally, each of the plurality of context storages 420 is associated with one or more operations of the plurality of concurrent threads 140. Optionally, a context storage of plurality of context storages 420 is used to store a thread context of each of the plurality of concurrent threads 140 while waiting for completion of execution of the one or more operations associated with the context storage, for the thread.

Optionally, one or more processing circuitry 410 is connected to one or more testing circuitry 430. Optionally, one or more testing circuitry 430 is used to apply an availability test for a thread identification value to test whether the thread identification value is available in a context storage of plurality of context storages 420. Optionally, the availability test is applied when selecting a thread of the plurality of threads to execute the pipeline 110. Optionally, the availability test is applied when a thread completes execution of one of the plurality of operations 110 and is ready to move to a following operation in the pipeline 110. Optionally, one or more processing circuitry 410 comprise the one or more testing circuitry 430. Optionally, one or more processing circuitry 410 comprise processing unit 401.

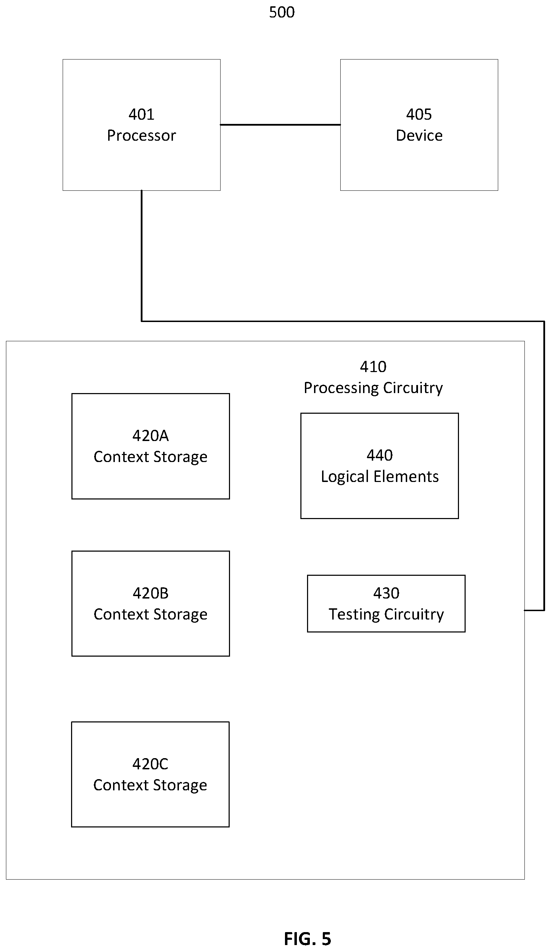

In some embodiments one or more processing circuitry 410 comprise one or more reconfigurable processing grids. Reference is now made also to FIG. 5, showing a schematic block diagram of another exemplary system 500, according to some embodiments. In such embodiments, at least one of the one or more processing circuitry 410 is a reconfigurable processing grid. Optionally, the reconfigurable processing grid comprises a plurality of logical elements 440. Optionally, plurality of logical elements 440 is connected by a plurality of reconfigurable data routing junctions. Optionally, processing unit 401 configures the reconfigurable processing grid to execute one or more operations of plurality of operations 110. Optionally, each of the one or more operations of plurality of operations 110 is implemented by part of the reconfigurable processing grid. Optionally, processing unit 401 configures the reconfigurable processing grid to execute at least part of one or more of the methods described below. Optionally, configuring the reconfigurable processing grid comprises manipulating one or more of the plurality of logical elements 440, and additionally or alternatively manipulating one or more of the plurality of routing junctions connecting the plurality of logical elements 440. Optionally, processing unit 401 configures the reconfigurable processing grid while the one or more reconfigurable processing grid executes at least some of the plurality of concurrent threads 140.

In some embodiments described herewithin, plurality of concurrent threads 140 are at least part of a plurality of threads of a software program executed by system 400 or system 500. Optionally, each of plurality of concurrent threads 140 implements a common dataflow graph, such that plurality of operations 110 are at least part of the common dataflow graph. Optionally, the common dataflow graph is implemented by configuring a subset of the plurality of logical elements 440 in the reconfigurable processing grid. Optionally, each operation of the plurality of operations corresponds to one or more logical elements of plurality of logical elements 440.

In some embodiments, system 400 or system 500 are configured to execute plurality of concurrent threads 140. Optionally, each of the plurality of operations 110 is executed by a subset of the plurality of processing circuitries 410. To execute plurality of concurrent threads 140, system 400 or system 500 may implement the following optional method.

For brevity, unless otherwise noted henceforth the term "processing circuitry" is used to mean "one or more processing circuitry" and the terms are used interchangeably.

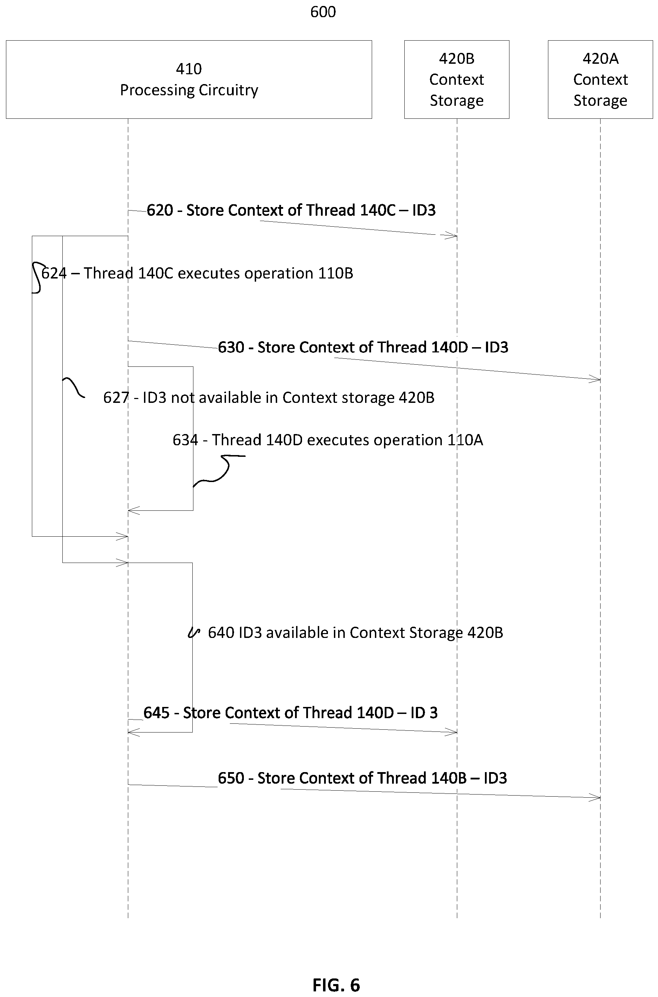

Reference is now made also to FIGs. 6, 7, and 8, which illustrate the temporal relationships between operations performed by the processing circuitry 410, the plurality of context storages 420, and the plurality of concurrent threads 140 according to various embodiments. In these figures, the vertical dotted lines represent lifelines for different system components, with time progressing from top to bottom. For visual clarity, a separate lifeline is shown for each component, but these all operate within the same temporal framework.

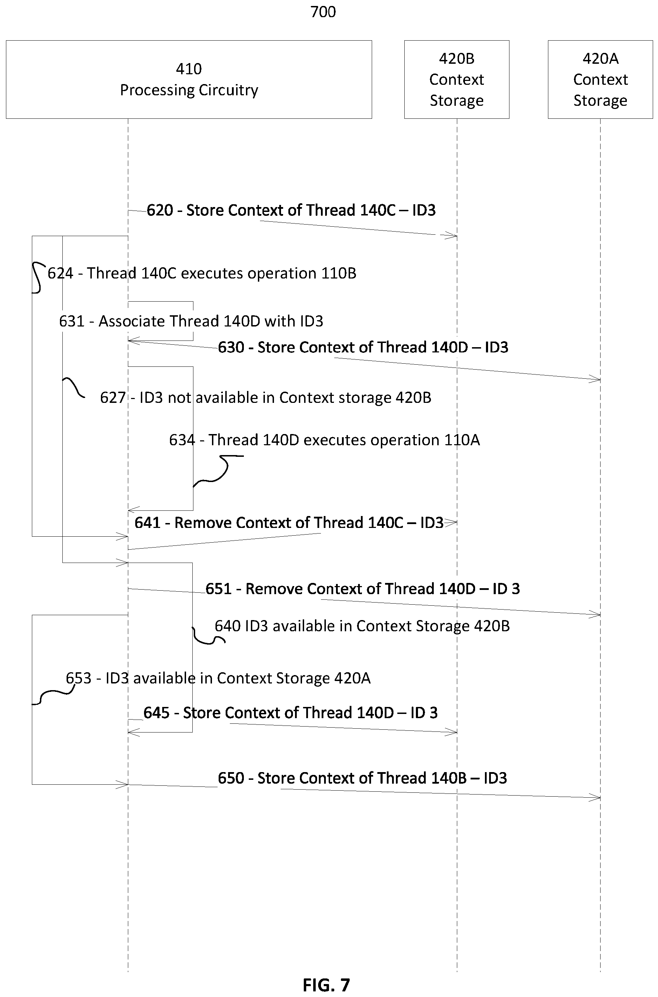

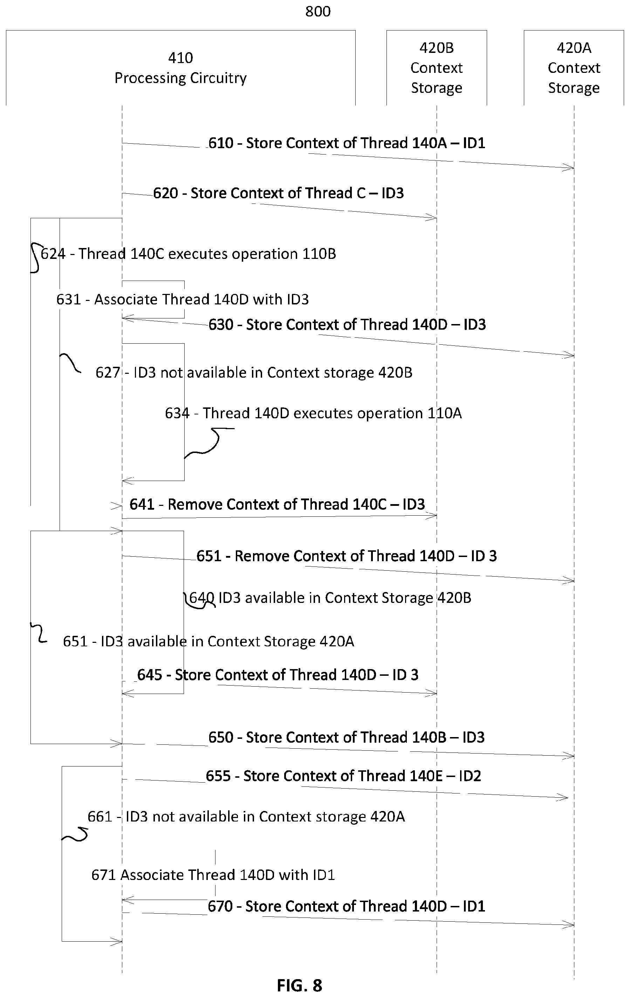

Reference numbers used in these sequence diagrams correspond to the same elements introduced in earlier figures but are now arranged to show their temporal relationships and interactions during thread execution. Each figure demonstrates a different aspect of the thread management process: FIG. 6 illustrates the basic flow of concurrent thread execution and context storage management, FIG. 7 shows the storing of thread-ID associations and context removal from storage, and FIG. 8 demonstrates out-of-order execution capabilities and backend operations.

Reference is now made also to FIG. 6, showing a sequence diagram of an optional flow of operations 600, according to some embodiments. Optionally, processing circuitry 410 executes simultaneously plurality of threads 140. For example, in 634 processing circuitry 410 may execute operation 110A of a first thread, for example thread 140D concurrently to executing in 624 operation 110B of a second thread, for example thread 140C. Optionally, in 630 processing circuitry 410 stores a first thread context of thread 140D in context storage 420A. Optionally, the first thread context of thread 140D is identified in context storage 420A by ID 3. Optionally, executing operation 110A of thread 140D comprises modifying one or more values stored in context storage 420A.

Optionally, in 620 processing circuitry 410 stores a second thread context of thread 140C in context storage 420B, where optionally the second thread context of thread 140C is identified by ID 3.

While the second context of thread 140C is stored in context storage 420B, ID 3 may not be available for another thread in context storage 420B. Thus, in 627, an outcome of applying an availability test to ID 3, optionally by testing circuitry 430, may indicate that ID 3 is not available in context storage 420B, optionally starting after storing the second thread context of thread 140C in context storage 420B and before completing execution of operation 110B in 624. While an outcome of applying the availability test to ID 3 indicates that ID 3 is not available in context storage 420B, (i.e. the duration of 627), optionally processing circuitry continues to store the first thread context of thread 140D in context storage 420A.

In 640, after thread 140C completes execution of operation 110B, an outcome of applying the availability test by testing circuitry 430 to ID 3 may indicate that ID 3 is available in context storage 420B.

When first thread 140D completes execution of operation 110A in 634, and when in 640 the outcome of applying the availability test by testing circuitry 430 to ID 3 indicates that ID 3 is available in context storage 420B, in 645 processing circuitry 410 optionally stores the first context of thread 140D in context storage 420B. Optionally, storing the first context of thread 140D in context storage 420B comprises modifying one or more of the plurality of runtime context values of the first context of thread 140D. Optionally, storing the first context of thread 140D in context storage 420B comprises storing one or more other values, modified when executing operation 110A.

Optionally, applying the availability test to ID 3 comprises an attempt to consume a credit associated with ID 3 and context storage 420B. Optionally, the credit is produced by context storage 420B and is consumed by testing circuitry 430 when ID 3 is available in context storage 420B, thus indicating that ID 3 is available in context storage 420B. Optionally when ID 3 is not available in context storage 420B testing circuitry 430 fails to consume the credit, thus indicating that ID 3 is not available in context storage 420B.

Optionally, removing the first thread context of thread 140D from context storage 420A allows context storage 420A to produce another credit associated with ID 3 and context storage 420A. Optionally, when the first thread context of thread 140D is removed from context storage 420A processing circuitry ceases to identify the first context of thread 140D in context storage 40A by ID 3. Optionally, in 650 processing circuitry 410 stores in context storage 420A a third context of third thread 140B, the third context optionally identified therein by ID 3. Optionally storing the third context in context storage 420A comprises consuming the other credit by testing circuitry 430, when testing whether ID 3 is available in context storage 420A.

Reference is now made also to FIG. 7, showing a sequence diagram of another optional flow of operations 700, according to some embodiments.

Optionally, the plurality of context storages 420 comprise a sequence of context storages. Optionally, first context storage 420A has no preceding context storage in the sequence of context storages. Optionally, context storage 420C is an exit context storage, having no succeeding context storage in the sequence of context storage.

Optionally, before storing the first context of thread 140D in context storage 420A, in 631 processing circuitry 410 associates thread 140D with ID 3 and stores this association. Thus, thread 140D is associated with ID 3 until execution of thread 140D completes for one run of pipeline 110, and the first context of thread 140D, when stored in any of plurality of context storages 420, is identified by ID 3 during that one run. Optionally, the association is stored in a memory component managed by processing circuitry 410. Optionally, the memory component can store an association between identification value and a set of threads of the plurality of concurrent threads. Optionally for each of the plurality of concurrent threads the memory component can store an association with an identification value.

In 641, when thread 140C completes execution of operation 110B, processing circuitry 410 optionally removes the second context of thread 140C from context storage 420B. Optionally, processing circuitry 410 provides testing circuitry 430 with one or more token values that indicate that ID 3 is available in context storage 420B. A token may be the identification value ID 3. Testing circuitry 130 may use the token to update an internal indication that ID 3 is available in context storage 420B. Optionally, a token includes an explicit availability indication value. Optionally a token includes a status value indicative of a status of context storage 420B. Optionally, testing circuitry 430 stores at least one of the one or more token values and uses the at least one token value when applying the availability test.

In 640, ID 3 may become available in context storage 420B after the second context of thread 140C is removed from context storage 420B.

In 651, processing circuitry 410 optionally removes the first thread context of thread 140D from context storage 420A, such that in 653 applying the availability test to ID 3 optionally indicates that ID 3 is available in context storage 420A. Optionally, processing circuitry 410 removes the first thread context from context storage 420A when ID 3 becomes available in context storage 420B. Optionally, processing circuitry 410 removes the first thread context of thread 140D from context storage 420A based on an outcome of other processing done by processing circuitry 410. Optionally, removing the first thread context from context storage 420A comprises updating a validity indicator for an entry storing the first thread context of thread 140D. Optionally, removing the first thread context from context storage 420A comprises updating an availability of ID 3 in context storage 420A.

When processing circuit 410 executes thread 140B simultaneously to executing thread 140D and thread 140C, when in 653 applying the availability test to ID 3 indicates that ID 3 is available in context storage 420A, allowing processing circuitry 410 to optionally store in 650 the third context of thread 140B in context storage 420A identified by ID 3.

In some embodiments, the present disclosure enables executing a thread of the plurality of concurrent threads in a loop, repeating execution of the thread in the pipeline 110 in each of a plurality of iterations. In addition, the present disclosure enables in some embodiments out of order execution of threads. Reference is now made also to FIG. 8, showing a sequence diagram of yet another optional flow of operations 800, according to some embodiments.

Optionally, before storing first thread context of thread 140D in context storage 420A identified by ID 3, and before storing second thread context of thread 140C in context storage 420B identified by ID 3, in 610 processing circuitry 410 stores and stores a fourth thread context of a fourth thread 140A in context storage 420A, identified by ID 1. Optionally, thread 140C progresses in the pipeline 110 and executes operation 110B before thread 140A completes execution of operation 110A even though thread 140A began execution of operation 110A before thread 140C executed operation 110A.

In 661, an outcome of an availability test applied to ID 3 optionally indicates that ID 3 is not available in context storage 420A, optionally because the third context of thread 140B is stored in context storage 420A and identified by ID 3. In 655 processing circuitry 420 optionally stores a fifth context of fifth thread 140E in context storage 420A identified by ID 2, which is optionally available.

When thread 140D completes execution of operation 110C which is associated with exit context storage 420C processing circuitry may remove the association between thread 140D and ID 3. Optionally, thread 140D executes pipeline 110 at least one more time, optionally first being added to queue 120. When thread 140D executes pipeline 110 in another iteration and applying the availability test in 661indicates that ID 3 is not available in context storage 420A, in 671 processing circuitry 410 may perform a new association between thread 140D and ID 1 and store the new association, and in 670 optionally store a new first context of thread 140D in context storage 420A identified by ID 1, and not ID 3 as in a previous iteration. Optionally, the new association is performed when removing the association between thread 140D and ID 3. Optionally, the new association is performed when thread 140D is selected from queue 120 to execute pipeline 110. A context of a thread may be preserved on the back-edge, when executing the pipeline 110 one or more additional times. Thus, the new first context of thread 140D optionally comprises at least some runtime context values of the plurality of runtime context values of the first thread context that was stored in a previous iteration.

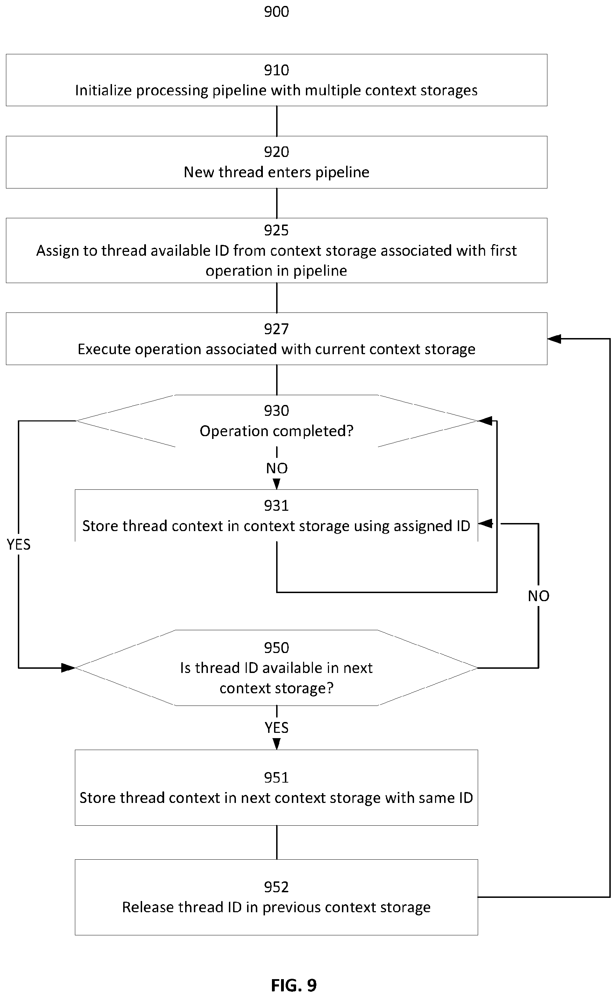

While FIGs. 6, 7 and 8 illustrate specific sequential operations in the thread management process, FIG. 9 provides a broader view of a method for reusing thread identification values when executing a plurality of concurrent threads according to some embodiments described herewithin.

Reference is now made also to FIG. 9, showing a flowchart of an additional other optional flow of operations 900, according to some embodiments.

In such embodiments, in 910 processing pipeline 110 is initialized in processing circuitry 410, and each of plurality of operations 110 is associated with one of plurality of context storages 420. Optionally, processing unit 401 configures processing circuitry 410 and additionally or alternatively configures plurality of context storages 420 to initialize pipeline 110 and additionally or alternatively one or more associations between the plurality of context storages 420 and the plurality of operations 110.

In 920 a new thread optionally enters the pipeline, for example thread 140D. In 925, processing circuitry 410 optionally assigns to thread 140D an available ID from context storage 420A which is associated with a first operation of pipeline 110, i.e., operation 110A, for example ID3. In 927, processing circuitry 410 executes operation 110A for thread 140D.

In 930, processing circuitry 410 optionally determines whether operation 110A has completed for thread 140D. If not, in 931, while waiting for thread 140D to complete execution of operation 110A, processing circuitry 410 stores thread 140D's context in context storage 420A, identified in context storage 420A by ID3.

Upon completion of operation 110A for thread 140C, in 950 processing circuitry 410 optionally tests in 950 whether ID3 is available in a next context storage, for example context storage 420B. If ID3 is not available, optionally due to another thread using ID3 in the target context storage, for example thread 140C, optionally the thread context of thread 140D remains in context storage 420A, or is added to context storage 420A if was not stored there before.

When ID3 becomes available in context storage 420B, in 951 processing circuitry 410 optionally stores the thread context of thread 140D in context storage 420B while maintaining the same ID such that thread context of thread 140D is identified in context storage 420B by ID3, and in 952 processing circuitry 410 optionally releases ID3 in the context storage 420A, making ID3 available for other threads. It should be noted that steps 951 and 952 may be executed in any order, that is processing circuitry 410 may release ID3 before storing the thread context of thread 140D in context storage 420B.

Optionally, processing circuitry 410 repeats steps 927, 930, 931, 950, 951 and 952 for every operation of plurality of operations 110 executed by thread 140D.

When yet another thread enters the pipeline in another execution of 920, for example thread 140B, in executing 925 for thread 140B processing circuitry 410 optionally assigns thread 140B ID3 for operation 110A associated with context storage 420A, which is still associated with thread 140D and thread 140C in other context storages.

In some other embodiments, the present disclosure optimizes the use of context storage resources for out-of-order execution capabilities even further. To do so, in such other embodiments described herewithin, a context storage may be a multi-bank context storage having a plurality of logical banks, and the identifier assigned to a thread may be used multiple times in the multi-bank context storage. In such other embodiments, the identifier is used only once at a time in a bank of the plurality of logical banks, but the multi-bank context storage may store simultaneously more than one thread context associated with the identifier in more than one of the plurality of logical banks. Compared to the solution described above that uses unique identifiers in a context storage associated with an operation, these other embodiments described herewithin allow using a given amount of context storage resources to execute concurrently more threads than possible according to the solution described above that uses a unique identifier in a context storage associated with an operation, thus increasing throughput and additionally or alternatively reducing latency of executing the plurality of concurrent threads compared to other implementations described above.

In the following figures, some components are similar to those described in previous figures, and similar reference numbers were used to indicate similar components among the figures, without repeating their description.

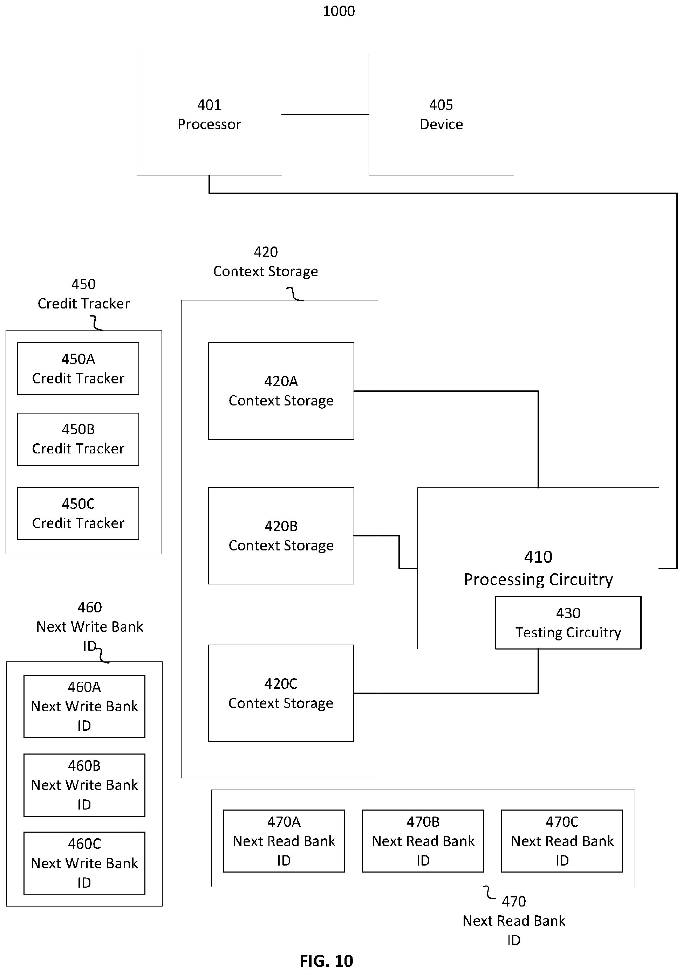

Reference is now made also to FIG. 10, showing a schematic block diagram of an exemplary system 1000 using multi-bank context storages, according to some embodiments.

In such embodiments, system 1000 comprises a plurality of credit trackers 450, for example comprising credit tracker 450A, credit tracker 450B and credit tracker 450C. Optionally, each credit tracker is associated with one of the plurality of context storages 420 and one of a plurality of identification values. Optionally, when a thread is associated with an identification value, the identification value associated with the thread is one of the plurality of identification values. Optionally, applying an availability test to the identification value comprises accessing at least one of the credit trackers. Optionally, a credit tracker is indicative of a number of thread contexts identified by the identification value associated therewith that can be added to the context storage associated therewith, and thus stored simultaneously in said context storage (optionally stored simultaneously with other context storages identified by said identification value and already stored in said context storage.) Each credit tracker optionally indicates a number of thread contexts associated with the identification value associated therewith that can be stored simultaneously in the context storage associated therewith. When a thread context identified by an identification value is stored in a context storage, a credit may be consumed from the credit tracker associated with that context storage and that identification value. When a thread context is removed from the context storage or is no longer needed by the operation associated with the context storage, a credit may be added to the credit tracker, subject to ordering constraints that preserve thread execution order.

Optionally, a credit tracker comprises a credit counter. Optionally, each of the plurality of credit trackers 450 comprises a credit counter. Optionally, a credit tracker is implemented as a counter, without additional circuitry. When a credit tracker comprises a credit counter or is implemented as a credit counter, consuming a credit from the credit tracker optionally comprises decrementing the credit counter. Optionally, adding a credit to the credit tracker comprises incrementing the credit counter. Optionally, the credit tracker has an available credit when the credit counter has a value that is greater than zero. Optionally, the credit tracker has no available credit when the credit counter has a value equal to zero. Some other possible implementations of a credit tracker include, but are not limited to, a list, a hash table and a bit map. When at least one of the one or more processing circuitry 410 is a reconfigurable processing grid, similar to system 500 described above, the reconfigurable processing grid optionally comprises the plurality credit trackers 450.

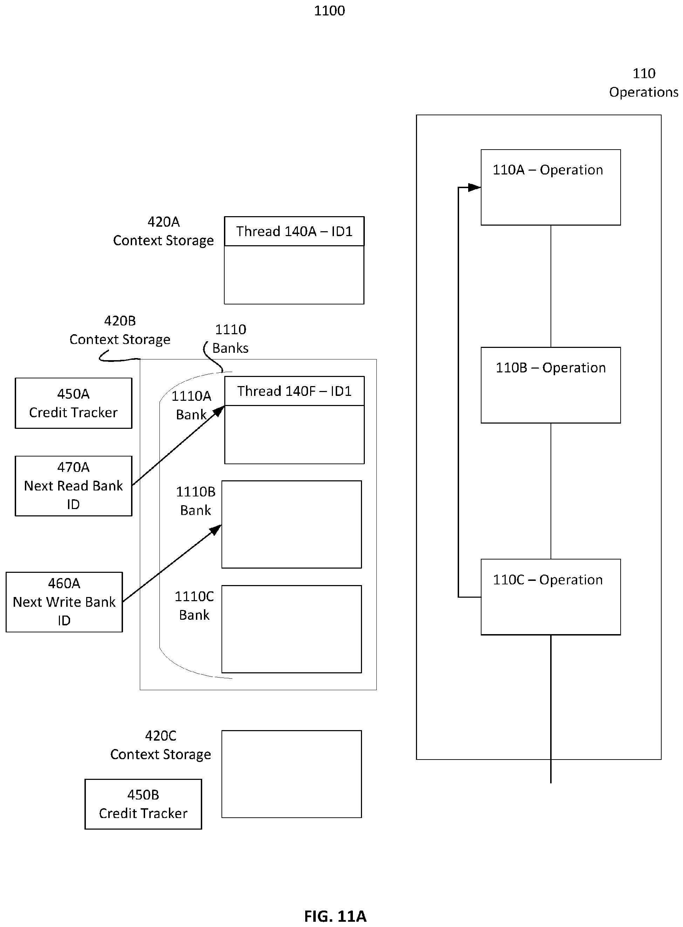

Optionally, one or more of the plurality of context storages 420 comprises a plurality of logical banks (described in more detail e.g. with respect to Figs. 11A-11D below, to keep Fig. 10 simple). For brevity, henceforth the term multi-bank context storage is used to mean a context storage having a plurality of logical banks, and the terms are used interchangeably. Each logical bank of the plurality of logical banks represents a logically partitioned portion of the multi-bank context storage, wherein optionally each logical bank is uniquely identified by a bank identifier and configured to store thread contexts independently of other logical banks. Optionally, in each multi-bank context storage each of the plurality of logical banks is identified by one of a plurality of bank identification values (bankID values).

Optionally, system 1000 comprises a plurality of next-write-bank identifiers (write-bank IDs) 460, optionally comprising write-bank ID 460A, write-bank ID 460B and write-bank ID 460C. Optionally each write-bank ID of the plurality of write-bank IDs 460 is associated with one of the plurality of identification values and one of the one or more multi-bank context storages and indicates in which bank of the plurality of logical banks of the multi-bank context storage associated therewith to store a thread context identified by the identification value associated therewith. Optionally, a value of the write-bank ID is one of the plurality of bankID values. Optionally, a write-bank ID is configured to advance in a cyclic manner through the sequence of bank identifiers, such that the first bank identifier in the sequence immediately follows the last bank identifier in the sequence. Optionally, the sequence of bank identifiers is an ordinal sequence of integer numbers. Optionally, the ordinal sequence of integer numbers starts with zero. When the sequence of bank identifiers is an ordinal sequence of integer numbers starting with zero, modular arithmetic may be used to advance through the sequence of bank identifiers in a cyclic manner. When at least one of the one or more processing circuitry 410 is a reconfigurable processing grid the reconfigurable processing grid optionally comprises the plurality write-bank IDs 460.

Optionally, system 1000 comprises a plurality of next-read-bank identifiers (read-bank IDs) 470, optionally comprising read-bank ID 470A, read-bank ID 470B and read-bank ID 470C. Optionally each read-bank ID of the plurality of read-bank IDs 470 is associated with one of the plurality of identification values and one of the one or more multi-bank context storages and indicates from which bank of the plurality of logical banks of the multi-bank context storage associated therewith to read the next thread context identified by the identification value associated therewith. Optionally, a value of the read-bank ID is one of the plurality of readID values. Described above. Optionally, a read-bank ID is configured to advance in a cyclic manner through the sequence of bank identifiers. When at least one of the one or more processing circuitry 410 is a reconfigurable processing grid the reconfigurable processing grid optionally comprises the plurality read-bank IDs 470.

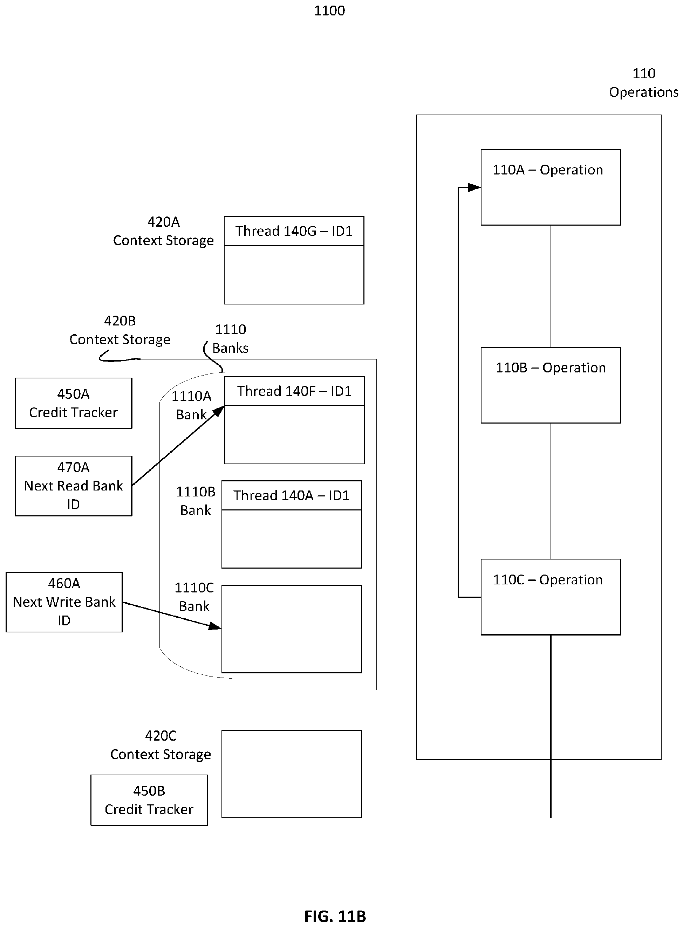

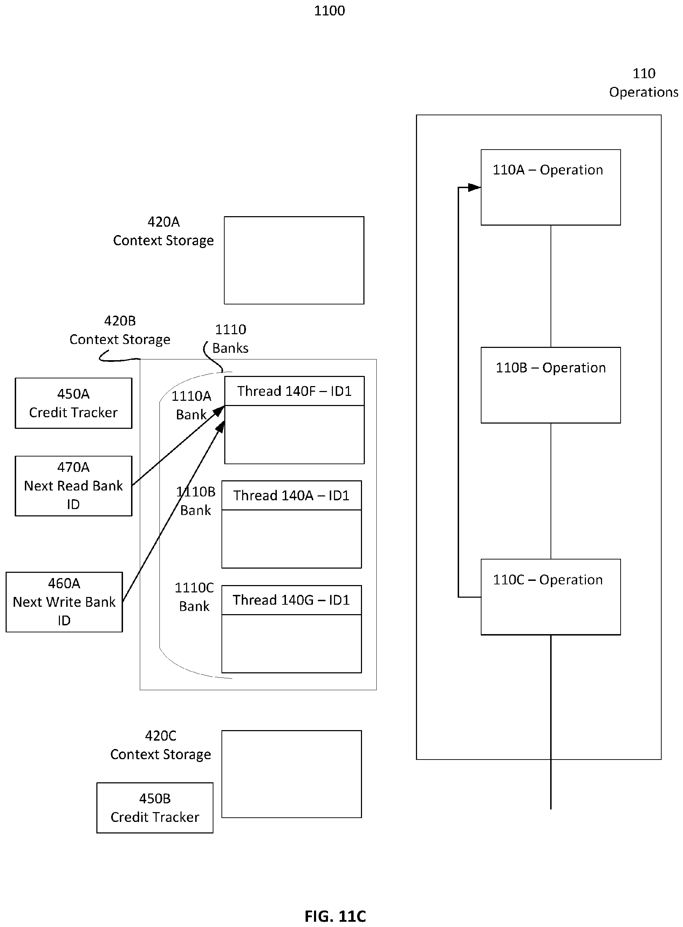

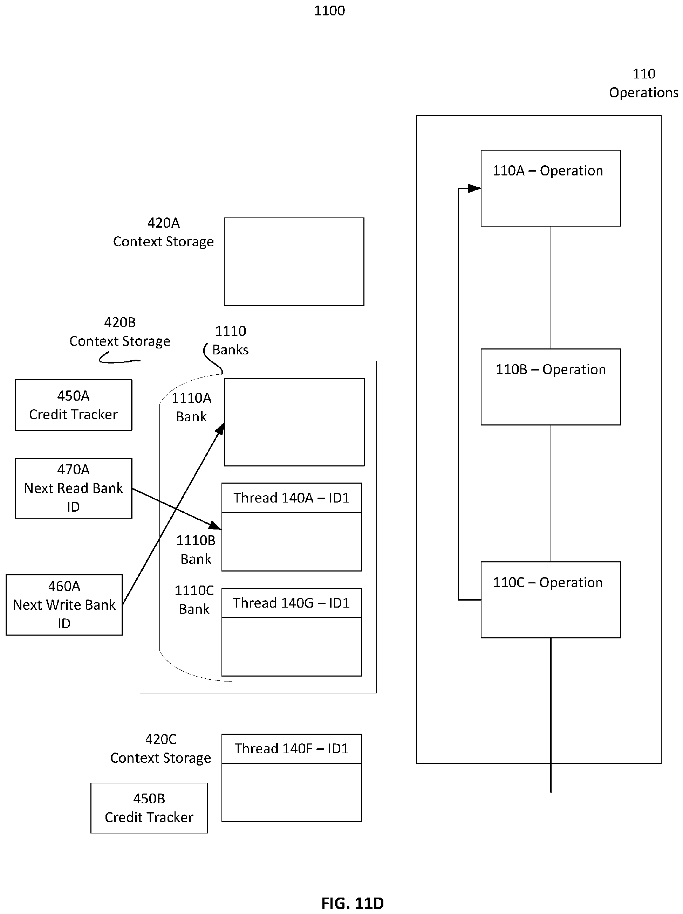

Reference is now made also to FIGs. 11A, 11B, 11C and 11D, showing schematic block diagrams of an exemplary processing framework 1100 with multi-bank context storages and reusable thread identification values, according to some embodiments.

Referencing also FIG. 11A, in such embodiments one or more of the plurality of context storages 420, for example context storage 420B, is a multi-bank context storage comprising plurality of logical banks 1110, for example comprising bank 1110A, bank 1110B and bank 1110C. Optionally, the plurality of logical banks are identified by an ordered cyclic sequence of identifiers, for example bank 1110A may be identified by bankID1, bank 1110B may be identified by bankID2 and bank 1110C may be identified by bankID3, such that in a cyclic manner bankID1 follows bankID3 in the sequence of identifiers. In this example, context storage 420B is associated with operation 110B. Optionally, each of the plurality of logical banks 1110A is configured to store an identified number of thread contexts, for example at least a number of identifiers in the plurality of identification values used to identify threads in the pipeline 110.

Optionally, credit tracker 450A is associated with context storage 420B and identification value ID 1, identifying in this example thread 140A and thread 140F. Optionally, write-bank ID 460A is associated with context storage 420B and ID 1, and optionally read-bank ID 470A is associated with context storage 420B and ID 1. Thus, one or more context threads stored in the plurality of logical banks 1110 of context storage 420B are managed optionally using one or more of credit tracker 450A, write-bank ID 460A and read-bank ID 470A. Optionally, credit tracker 450B is associated with context storage 420C and ID 1, for managing availability of ID 1 in context storage 420C. In this example, context storage 420C is associated with operation 110C.

Optionally, the plurality of logical banks 1110 are implemented using one or more of the plurality of context storages 420. For example, when the plurality of context storages 420 comprises a plurality of other context storages in addition to context storage 420A and context storage 420C, context storage 420B may be implemented using a subset of the plurality of context storages 420 consisting of at least some of the plurality of other context storages, such that bank 1110A is a first of the plurality of other context storages, 1110B is a second of the plurality of other context storages and 1110C is a third of the plurality of other context storages. Optionally, each of the subset of context storages is associated with operation 110B. This increases usability of system 1100, allowing configuration of the available plurality of context storages 420 according to runtime characteristics of the plurality of concurrent threads 140, for example latency characteristics of one or more of the plurality of operations 110.

It should be emphasized that the current example shows a plurality of logical banks having three logical banks to simplify the drawing while demonstrating the various steps of the proposed method, however the method described below may be used similarly with a plurality of logical banks comprising more than three banks, comprising two banks and even comprising one bank (in which case read-bank ID 470A and write-bank ID 460A point to the one bank, and credit tracker 450A tracks only one possibly available credit.)

In this example, both thread 140A and thread 140F are associated with ID 1, with thread 140F beginning execution of plurality of operations 110 before thread 140A. In this example, a first thread context of thread 140F is stored in bank 1110A and identified by ID 1, and read-bank ID 470 has a value of bankID1, identifying bank 1110A as the next bank from which to read a thread context identified by ID 1. Optionally, neither bank 1110B nor bank 1110C are storing another thread context identified by ID 1. At this point in this example, credit tracker 450A is indicative of two available credits for storing thread contexts associated with ID 1 in context storage 420B.

Optionally, ID 1 is free in contact storage 420C, and credit tracker 420B is indicative of at least one available credit for storing thread contexts associated with ID 1 in context storage 420C.

Optionally, thread 140A that entered pipeline 110 after thread has a second thread context stored in context storage 420A, associated with operation 110A and identified by ID 1. When thread 140A completes execution of operation 110A, optionally the second thread context of thread 140A can be stored in context storage 420B in bank 1110B pointed to by write-bank ID 460A and identified in bank 1110B by ID 1.

Reference is now made also to FIG. 11B. Further in this example, the second thread context of thread 140A is now stored in context storage 420B in bank 1110B that was pointed to by write-bank ID 460A and identified by ID 1. Optionally, write-bank ID 460A was advanced to point at bank 1110C, identified by bankID3, following bankID2 in the cyclic sequence of identifiers. In this example read-bank ID 470A remains pointing at bank 1110A since thread 140F has not finished executing operation 110B. Optionally, a third thread 140G starts executing the pipeline 110. Optionally, the third thread 140G is associated with ID 1 and a thread context of thread 140G is stored in context storage 420A while thread 140G executes operation 110A associated with context storage 420A. When thread 140F completes execution of operation 110A, optionally the third thread context of thread 140F can be stored in context storage 420B in bank 1110C pointed to by write-bank ID 460A and identified in bank 1110C by ID 1. At this point in this example, credit tracker 450A is indicative of one available credits for storing thread contexts associated with ID 1 in context storage 420B.

Reference is now made also to FIG. 11C. Further in this example, the third thread context of thread 140F is now stored in context storage 420B in bank 1110C that was pointed to by write-bank ID 460A and identified by ID 1. Optionally, write-bank ID 460A was advanced to point at bank 1110A, identified by bankID1, following bankID3 in the cyclic sequence of identifiers. In this example read-bank ID 470A still remains pointing at bank 1110A since thread 140F has not finished executing operation 110B. At this point in this example, credit tracker 450A is indicative of no available credits for storing thread contexts associated with ID 1 in context storage 420B, as each of the plurality of logical banks 1110 is storing a context thread identified by ID 1.

Further in this example, the next bank to read from context storage 420B, as indicated by read-bank ID 470A. Even if thread 140A and additionally or alternatively thread 140G complete executing operation 110B, their respective context cannot be read from context storage 420B until thread 140F, that started in pipeline 110 before them, completes execution of operation 110B.

Reference is now made also to FIG. 11D. Further in this example, when thread 140F completes execution of operation 110B, the first thread context of thread 140F can be removed from bank 1110A and optionally stored in context storage 420C, subject to an outcome of an availability test for ID 1 in context storage 420C, for example by accessing credit tracker 450B.

Optionally, the read-bank ID 470A is advanced to the next bank following bank 1110A, that is bank 1110B. Optionally, a credit is added to credit tracker 450A to indicated that there is now a credit for storing another thread context identified by ID 1 in context storage 420B (specifically, in bank 1110A pointed to by write-bank ID 460A). This allows reading multiple thread contexts identified in context storage 420B in the order in which they were written - first for thread 140F, next for thread 140A and after that for thread 140G.

To execute plurality of concurrent threads 140, system 1000 may implement the following optional method. While system 1000 is described to resemble system 400 with additional components, it should be noted that any components add to system 1000 compared to system 400 may be added to system 500, and similar methods apply to such an implementation.

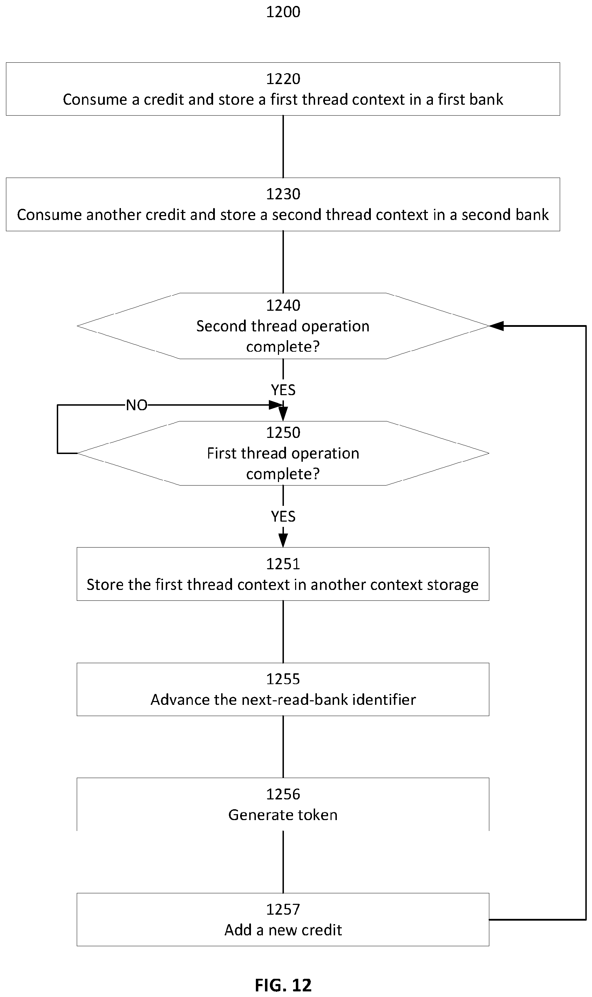

Reference is now made also to FIG. 12, showing a flowchart of an optional flow of operations 1200 for using a multi-bank context storage, according to some embodiments. In such embodiments, in 1220 processing circuitry 410 consumes a credit from credit tracker 450A and stores a first thread context of thread 140F in bank 1110A of context storage 420B.

Optionally, storing in a bank a thread context identified by an identification value is subject to identifying there is an available credit for storing a thread context identified by the identification value in the context storage. Optionally, storing the thread context in the bank comprises identifying the bank according to a write-bank ID associated with the context storage and the identification value. Optionally, storing the thread context in the bank further comprises advancing the write-bank ID in a cyclic manner, through the cyclic sequence of bank identifiers identifying the plurality of logical banks.

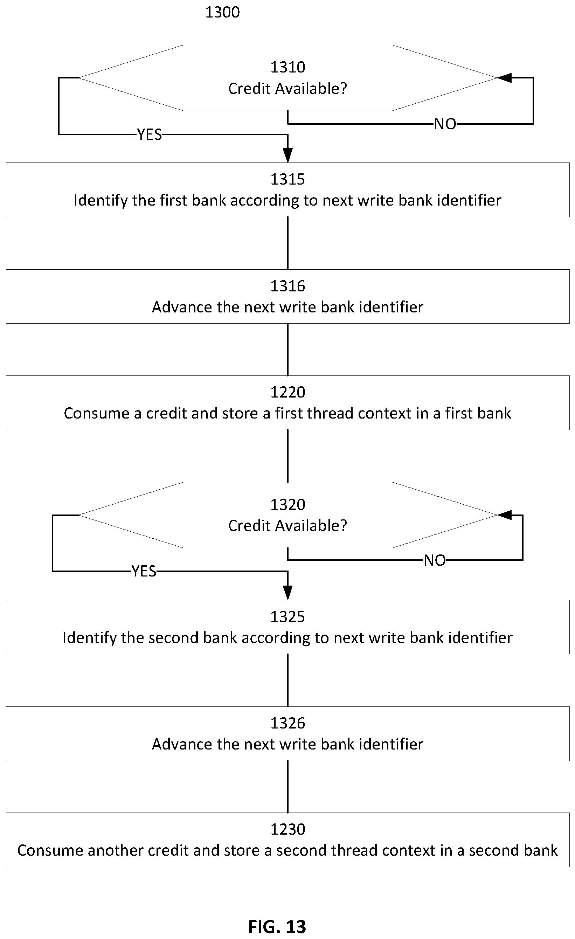

Reference is now made also to FIG. 13, showing a flowchart of an optional flow of operations 1300 for storing contexts in a multi-bank context storage, according to some embodiments. In this example, to execute 1220, in 1310 processing circuitry 410 identifies that credit tracker 450A has an available credit. When credit tracker 450A has a credit counter, this may be by identifying that the credit counter is greater than zero. Optionally, the testing circuitry 430 accesses credit tracker 450A and identifies that credit tracker 450A has an available credit. Optionally, testing circuitry 430 applies a different availability test. When credit tracker 450A has an available credit, in 1315 processing circuitry 410 optionally identifies bank 1110A according to write-bank ID 460A. In 1316, processing circuitry 410 optionally advances next-bank ID 460A in a cyclic manner to identify bank 1110B. In 1220, processing circuitry optionally consumes a credit from credit tracker 450A and stores the first thread context of thread 140F in bank 1110A, identified therein by ID 1.

Reference is now made again to FIG. 12. Optionally, after storing the first thread context of thread 140F in bank 1110A, in 1230 processing circuitry stores the second thread context of thread 140A in bank 1110B, identified therein by ID 1.

Optionally, storing the second thread context of thread 140A is subject to credit tracker 450A having an available credit. Reference is now made again to FIG. 13. In this example, to execute 1230, in 1320 processing circuitry 410 identifies that credit tracker 450A has an available credit. Optionally, in a first test, credit tracker 450A does not have an available credit. Optionally, in a second test performed after the first test, credit tracker 450A has an available credit. When credit tracker 450A has an available credit, in 1325 processing circuitry 410 optionally identifies bank 1110B according to write-bank ID 460A (that was advanced after storing the first thread context of thread 140F in bank 1110A). In 1326, processing circuitry 410 optionally advances next-bank ID 460A in a cyclic manner to identify bank 1110C. In 1230, processing circuitry optionally consumes a credit from credit tracker 450A and stores the second thread context of thread 140A in bank 1110B, identified therein by ID 1.

Reference is now made again to FIG. 12. Optionally, in 1240 processing circuitry 410 identifies that thread 140A completed operation 110B. Optionally, in 1250 processing circuitry 410 identifies that thread 140F has not completed operation 110B. Optionally, processing circuitry 410 cannot execute 1251 until identifying in 1250 that thread 140F has completed operation 110B. In 1251 processing circuitry 410 optionally removes the first thread context of thread 140F from bank 1110A and stores the first thread context in context storage 420C, optionally subject to identifying that credit tracker 450B has an available credit. In 1255, processing circuitry optionally advances read-bank ID 470A in a cyclic manner to point at bank 1110B for reading from next. After advancing read-bank ID 470A, in 1256 processing circuitry 410 optionally generates a token. Optionally, the token indicates that ID1 is available for storing in multi-bank context storage 420B another thread context of another thread associated with ID 1. Optionally, processing circuitry 410 generates the token subject to storing the first thread context in context storage 420C. The duration of executing an operation may be measured using an identified time unit, for example a clock tick. Optionally, storing the first thread context in context storage 420C requires more than one time unit. Optionally, ID 1 is available for storing in multi-bank context storage 420C another thread context of another thread associated with ID 1 before storing the first thread context in context storage 420C is completed.

In 1257, processing circuitry 410 optionally adds a new credit to credit tracker 450A. Optionally, processing circuitry adds the new credit to credit tracker 450A when ID 1 is available for storing in multi-bank context storage 420C another thread context of another thread associated with ID 1 and before storing the first thread context in context storage 420C is completed. Optionally, processing circuitry 410 adds the new credit to credit tracker 450A only subject to generating the token. Optionally, processing circuitry 410 comprises sub-circuitry for generating and providing the token, and for receiving the token and adding the new credit. Optionally, testing circuitry 430 receives the token.

Optionally, after advancing read-bank ID, in executing 1240 again and identifying that thread 140A completed execution, now the read-bank ID is pointing at bank 1110B, indicating that thread 140F has completed execution.

Optionally, processing circuitry 410 repeats one or more of 1251, 1255, 1256 and 1257 for thread 140A, optionally adding another new credit to credit tracker 450A. It should be noted that when thread 140A completes operation 110B, the processing circuitry 410 does not add a new credit to credit tracker 450A until after thread 140F has completed operation 110B. This ordering constraint preserves the execution order of threads sharing the common identification value of operations following operation 110B in the pipeline.

The method above focuses on restoring order of execution of threads sharing the common identification value after executing operation 110B out of order. When thread 140F completes execution of operation 110B before thread 140A completes execution of operation 110B, processing circuitry 410 may execute one or more of 1251, 1255, 1256 and 1256 independently of whether thread 140A has completed execution of 110B.

When threads sharing a common identification value execute an operation associated with the multi-bank context storage out of order, when the earlier thread completes execution of the operation associated with the multi-bank context storage, thread contexts of all later threads sharing the common identification value which have completed execution can be handled - freeing from the context storage and adding new credits to the credit tracker.

Reference is now made again to FIG. 3B. In this example, when thread 140B, associated with ID 2, completes executing operation 110C, thread 140B is returned to queue 120 and its association with ID 2 is removed. Reference is now made again to FIG. 3E. When thread 140B executes pipeline 110 again, it is associated with a new identification value, ID 3. When a thread has only one context storage associated with it, once execution of the operation associated with the context storage completes removing an association between the thread and a first identification value and creating a new association between the thread and a second identification value is simple. However, the common dataflow graph implemented by the plurality of threads 140 may have a plurality of branches. Replacing an association between an identification value and all the plurality of branches of the dataflow graph, optionally while the thread implementing the dataflow graph is executed by pipeline 110, requires synchronization. Optionally, the present disclosure proposes, in some embodiments described herewithin, using an identification value allocator, and optionally using a gatekeeper circuitry in addition.

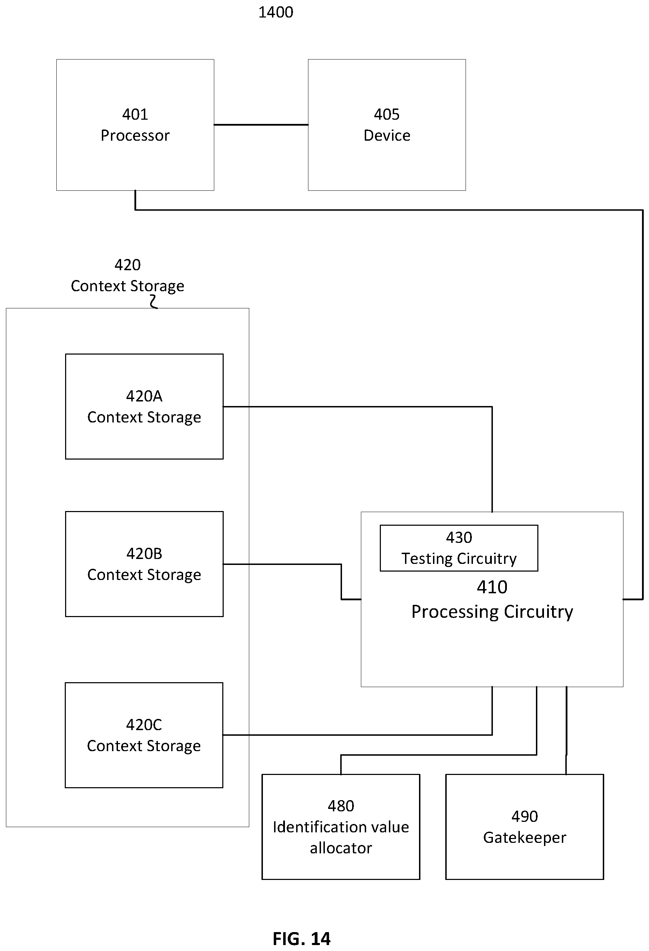

Reference is now made also to FIG. 14, showing a schematic block diagram of an exemplary system 1400 with an identification value allocator, according to some embodiments. In such embodiments, processing circuitry is additionally connected to identification value allocator 480, for assigning a new identification value to a thread, optionally replacing an existing identification value assigned to the thread. Optionally, processing circuitry 410 is connected to gatekeeper 490, for managing an association between the thread and the new identification value. When at least one of the one or more processing circuitry 410 is a reconfigurable processing grid the reconfigurable processing grid optionally comprises the identification value allocator 480 and additionally or alternatively the gatekeeper 490.

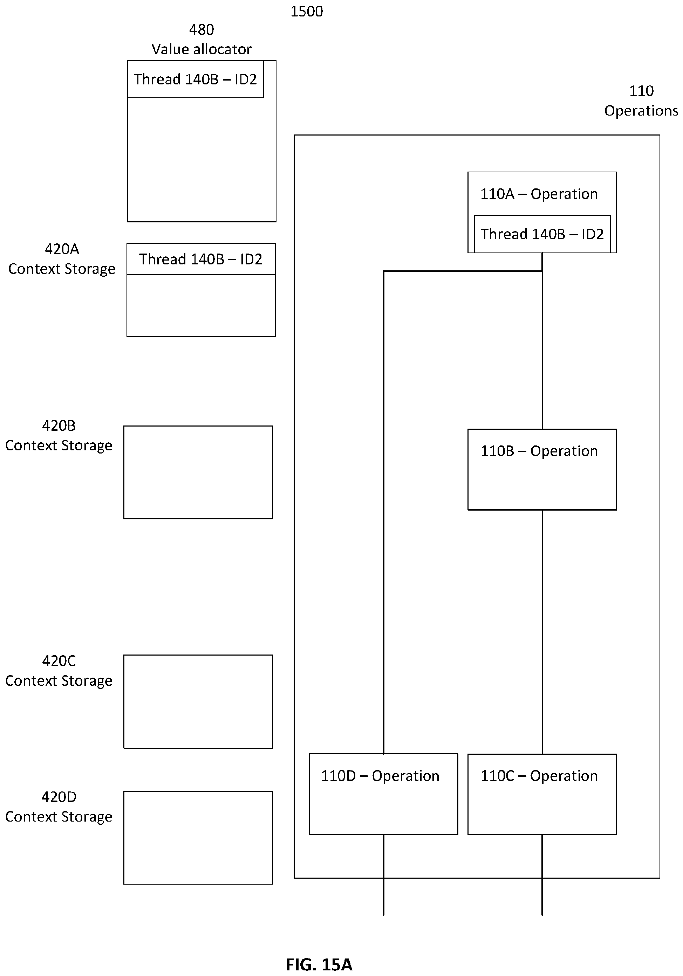

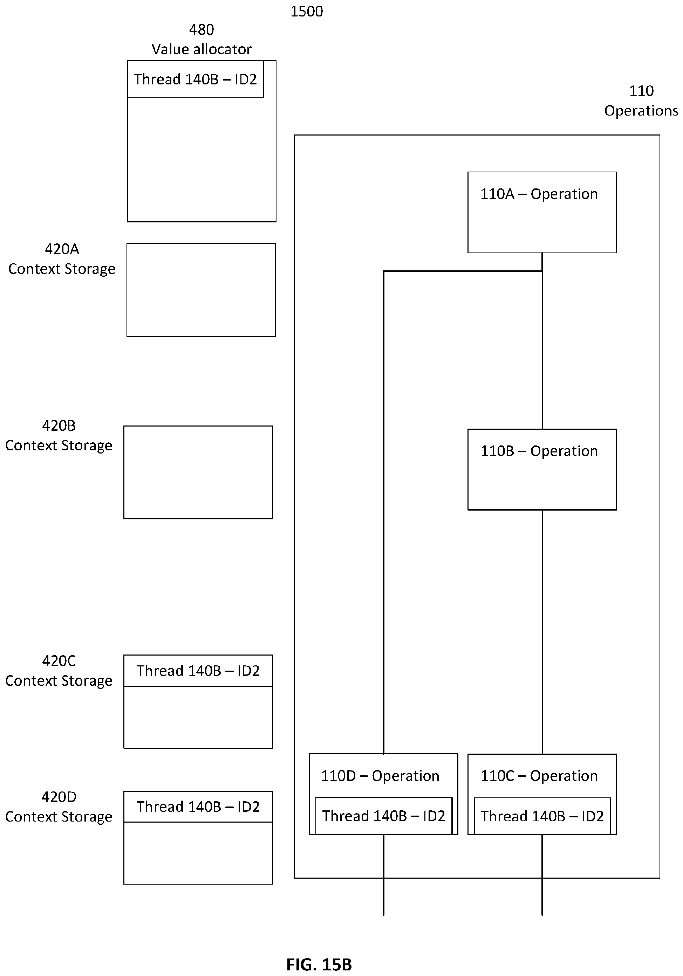

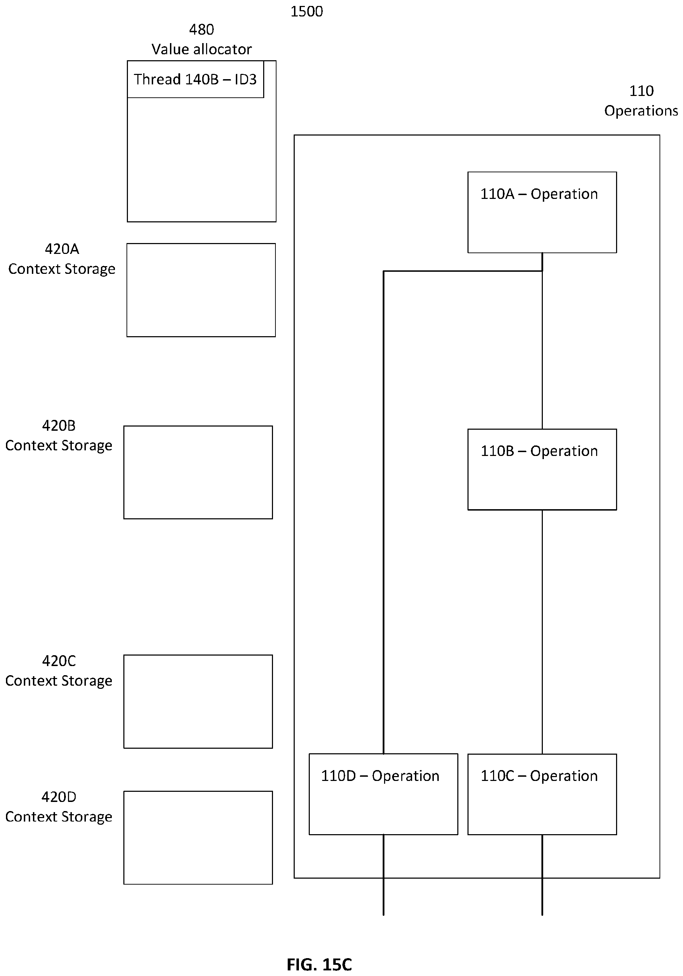

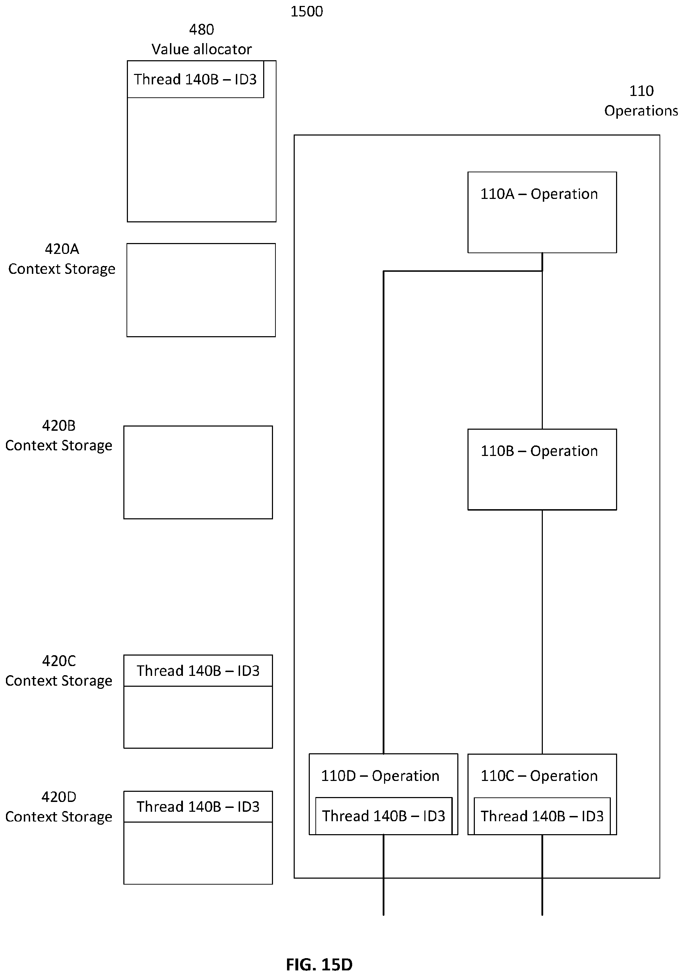

Reference is now made also to FIGs. 15A, 15B, 15C and 15D, showing schematic block diagrams of an exemplary processing framework 1500 with an identification value allocator, according to some embodiments. For simplicity, this framework is described as a modification of framework 300, however the changes to the framework may be applied to framework 1100 and similar methods apply.

Referencing also FIG. 15A, identification value allocator 480 stores an association between thread 140 and ID 2.

Optionally, the dataflow graph implemented by plurality of operations 110 comprises a plurality of branches, each comprising at least some of the plurality of operations. For example, a first branch of the plurality of branches may comprise operation 110A, associated with context storage 420A, operation 110B associated with context storage 420B and operation 110C associated with context storage 420C. Optionally, context storages associated with the first branch are organized in a sequence of context storages. Optionally, context storage 420A is a first context storage in the first branch, having no context storages preceding it in the sequence of context storages. Optionally, context storage 420C is an exit context storage of the first branch, having no other context storage succeeding it in the sequence of context storages.

Optionally, a second branch of the plurality of branches comprises operation 110A, and operation 110D, associated with context storage 420D.

When thread 140B executes operation 110A, a thread context of thread 140B may be stored in context storage 420A, associated with operation 110A.

Optionally, one or more of context storage 420A, context storage 420B, context storage 420C or context 420D have multiple banks.

Reference is now made also to FIG. 15B. In this example, as execution of thread 140B progresses through pipeline 110, two thread contexts may be stored for thread 140B as it concurrently executes operation 110C of the first branch and operation 110D of the second branch. In this example, context storage 420C stores a thread context for thread 140B, identified therein by ID 2, simultaneously to context storage 420D storing another thread context for thread 140B, identified therein by ID 2.

It should be noted again, that context storage 420C, context storage 420D, or both have multiple banks, allowing flexibility in controlling synchronization between branches and additionally or alternatively flexibility in the allocation of the plurality of context storages 420, to balance between increasing throughput and conserving resources.

Reference is now made also to FIG. 15C. When thread 140B has completed execution of operation 110C, associated with the exit context storage 420C, and has exited the pipeline, optionally a new association between thread 140B and ID 3 is stored, and each of the plurality of branches is associated with ID 3.

Optionally, the first branch is a master branch of the plurality of branches. Optionally, the master branch is associated with ID 3, and the master branch delivers ID 3 to the second branch.

Optionally, when the new association between thread 140B and ID 3 is stored, gatekeeper 490 is provided with ID 3 and gatekeeper 490 delivers ID 3 to the plurality of branches, including the first branch and the second branch.

Optionally, thread 140B executed pipeline 110 while associated with ID 2 in a first iteration of a plurality of iterations. When thread 140B executes operation 110A in a second iteration of a plurality of iterations, after the first iteration, a thread context associated with thread 140B may be stored in context storage 420A identified by ID 3. Additionally, or alternatively, when thread 140B executes an operation of another pipeline after executing pipeline 110, a thread context associated with thread 140B may be stored in another context storage associated with the operation of the other pipeline, identified therein by ID 3.

Optionally, the plurality of operations 110 comprises a first group of operations and a second group of operations. Optionally, the first group of operations precedes the second group of operations in the common dataflow graph. For example, the first group of operations may comprise operation 110A and operation 110B. Optionally, the second group of operations comprises operation 110C. Optionally, in a respective sequence of context storages associated the first branch, context storage 420B is an exit context storage of the respective sequence of context storages. Optionally, context storage 420C is a first context storage of the second group of operations.

Referencing FIG. 15B again. Instead of renaming thread 140B, i.e. changing an identification value associated with thread 140B, when thread 140B exits pipeline 110, thread 140B may be renamed while in pipeline 110, between execution of the first group of operations and the second group of operations.

Referencing also FIG. 15D, after thread 140B completes execution of operation 110B associated with exit context storage 420B, thread 140B may be renamed, changing its association from ID 2 to ID 3. Thus, in context storage 420C and context storage 430C, associated respectively with operation 110C and operation 110D, where operation 110B precedes operation 110C, thread contexts of thread 140B may be stored identified by ID 3. Also when renamed while executing in pipeline 110, the plurality of branches may be associated with ID 3 using a master branch or using gatekeeper 490.

To rename a thread, in some embodiments system 1400 implements the following optional method.

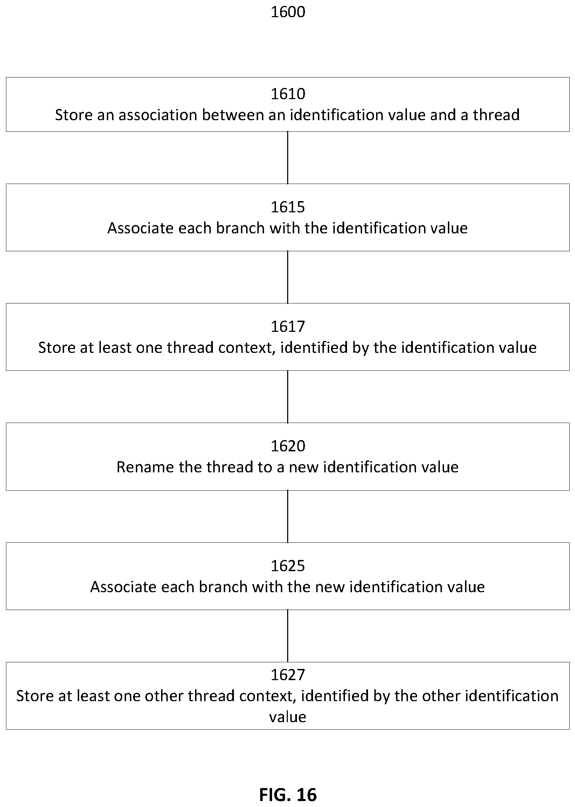

Reference is now made also to FIG. 16, showing a flowchart of an optional flow of operations 1600 for using an identification value allocator, according to some embodiments. Optionally, in 1610 processing circuitry 410 uses identification value allocator 480 to store an association between thread 140B and ID 2. In 1615, processing circuitry 410 optionally associates each of the plurality of branches of thread 140B, for example the first branch and the second branch, with ID 2.

Optionally, for each branch of at least one branch of the plurality of branches, for example for the first branch, in 1617 the processing circuitry 410 stores a thread context of thread 140B in context storage 420A, identified therein by ID 2. Additionally or alternatively, as thread 140B executes pipeline 110, processing circuitry 410 optionally stores the thread context of thread 140B in context storage 420B, identified therein by ID 2.

In 1620, processing circuitry 410 optionally uses identification value allocator 480 to rename thread 140B by removing the association between thread 140B and ID 2 and storing another association between thread 140B and ID 3.

In 1625, processing circuitry 410 optionally associates each of the plurality of branches of thread 140B, for example the first branch and the second branch, with ID 3. Optionally, associating each of the plurality of branches of thread 140B with ID 3 comprises associating the first branch, that is the master branch, with ID 3. Optionally, the master branch is configured to deliver ID 3 to the second branch, optionally in response to being associated with ID 3.

Optionally, associating each of the plurality of branches of thread 140B with ID 3 comprises providing the gatekeeper circuitry 490 with ID 3. Optionally, gatekeeper 490 is configured to deliver ID 3 to all the branches of thread 140B, for example the second branch.

In 1627, processing circuitry 410 stores for each branch of at least one branch of the plurality of branches, for example for the first branch, another thread context of thread 140B in context storage 420A, identified therein by ID 3, for example when thread 140B is renamed after completing execution of pipeline 110. Additionally or alternatively, for example when thread 140B is renamed after executing the first group of operations, i.e. after completing execution of operation 110, processing circuitry 410 optionally stores the other thread context of thread 140B in context storage 420C and additionally or alternatively in context storage 420D, identified by ID 3 therein.

The descriptions of the various embodiments have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

It is expected that during the life of a patent maturing from this application many relevant processing circuitries will be developed and the scope of the term "processing circuitry" is intended to include all such new technologies a priori.

As used herein the term "about" refers to ± 10 %.

The terms "comprises", "comprising", "includes", "including", "having" and their conjugates mean "including but not limited to". This term encompasses the terms "consisting of" and "consisting essentially of".

The phrase "consisting essentially of" means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example, the term "a compound" or "at least one compound" may include a plurality of compounds, including mixtures thereof.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment may include a plurality of "optional" features unless such features conflict.

Throughout this application, various embodiments may be presented in a range format. It should be understood that the description in range format is merely for convenience and brevity and should not be construed as an inflexible limitation on the scope of embodiments. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

It is appreciated that certain features of embodiments, which are, for clarity, described in the context of separate embodiments, may also be provided in combination in a single embodiment. Conversely, various features of embodiments, which are, for brevity, described in the context of a single embodiment, may also be provided separately or in any suitable subcombination or as suitable in any other described embodiment. Certain features described in the context of various embodiments are not to be considered essential features of those embodiments, unless the embodiment is inoperative without those elements.

Although embodiments have been described in conjunction with specific embodiments thereof, it is evident that many alternatives, modifications and variations will be apparent to those skilled in the art. Accordingly, it is intended to embrace all such alternatives, modifications and variations that fall within the spirit and broad scope of the appended claims.

It is the intent of the applicant(s) that all publications, patents and patent applications referred to in this specification are to be incorporated in their entirety by reference into the specification, as if each individual publication, patent or patent application was specifically and individually noted when referenced that it is to be incorporated herein by reference. In addition, citation or identification of any reference in this application shall not be construed as an admission that such reference is available as prior art to the present invention. To the extent that section headings are used, they should not be construed as necessarily limiting. In addition, any priority document(s) of this application is/are hereby incorporated herein by reference in its/their entirety.

## Claims

1. A system for executing a plurality of concurrent threads, comprising:
a plurality of context storages, each configured to store a plurality of thread contexts, each thread context for one of a plurality of concurrent threads, each concurrent thread comprising a plurality of operations, each of the plurality of context storages associated with at least one operation of the plurality of operations; and
at least one processing circuitry configured to:
while a first thread and a second thread of the plurality of concurrent threads are executed simultaneously by the at least one processing circuitry:
store a first thread context of the first thread in a first context storage of the plurality of context storages, the first thread context identified in the first context storage by an identification value;
store a second thread context of the second thread in a second context storage of the plurality of context storages, the second thread context identified in the second context storage by the identification value; and
upon completing execution of at least one first operation of the first thread, the at least one first operation associated with the first context storage, when an outcome of applying an availability test to the identification value indicates that the identification value is available in the second context storage, store the first thread context in the second context storage, the first thread context identified in the second context storage by the identification value.

2. The system of claim 1, wherein after storing the second thread context in the second context storage and before completing execution of at least one second operation of the second thread, where the at least one second operation is associated with the second context storage, the outcome of applying the availability test to the identification value indicates that the identification value is not available in the second context storage; and
wherein the at least one processing circuitry is further configured to:
while the outcome of applying the availability test to the identification value indicates that the identification value is not available in the second context storage, continue to store the first thread context in the first context storage.

3. The system of claim 1, wherein the at least one processing circuitry is further configured to, after storing the first thread context in the second context storage:
cease to identify the first thread context in the first context storage by the identification value; and
when applying another availability test to the identification value, compute another outcome that indicates that the identification value is available in the first context storage.

4. The system of claim 1, wherein the first thread context comprises a plurality of context values; and
wherein storing the first thread context in the second context storage comprises modifying at least one of the plurality of context values.

5. The system of claim 1, wherein the plurality of context storages comprises a sequence of context storages comprising the first context storage and an exit context storage;
wherein the first context storage has no preceding context storage in the sequence of context storages;
wherein the exit context storage has no succeeding context storage in the sequence of context storages; and
wherein the at least one processing circuitry is further configured to:
before storing the first thread context in the first context storage, store an association between the identification value and the first thread; and
after completing execution of the respective at least one operation of the first thread associated with the exit context storage, remove the association between the identification value and the first thread.

6. The system of claim 5, wherein the at least one processing circuitry is further configured to:
after completing execution of the respective at least one operation of the first thread associated with the exit context storage:
store a new association between a new identification value and the first thread; and
store a new first thread context of the first thread in the first context storage, the new first thread context identified in the first context storage by the new identification value.

7. The system of claim 6, wherein the new first thread context comprises at least some context values from the first thread context.

8. The system of claim 1, wherein each concurrent thread of the plurality of concurrent threads implements a common dataflow graph, where the common dataflow graph comprises the plurality of operations.

9. The system of claim 1, wherein the at least one processing circuitry comprises at least one reconfigurable processing grid;
wherein the at least one reconfigurable processing grid comprises a plurality of logical elements;
wherein the at least one reconfigurable processing grid comprises the plurality of context storages;
wherein the system further comprises at least one hardware processor configured to:
configure the at least one processing grid to execute at least one step that the at least one processing circuitry is configured to perform; and
configure at least some of the plurality of logical elements to implement the respective at least one operation associated with the first context storage.

10. The system of claim 1, wherein the at least one processing circuitry comprises testing circuitry for applying the availability test to the identification value; and
wherein the at least one processing circuitry is further configured to:
after completing execution of at least one second operation of the second thread:
remove the second thread context from the second context storage; and
provide the testing circuitry with at least one token value indicating that the identification value is available in the second context storage.

11. The system of claim 1, wherein the at least one operation comprises at least one of: a memory access operation, a mathematical operation, executing another computation-graph, an access to a co-processor, and an access to a peripheral device connected to the at least one processing circuitry.

12. The system of claim 1, wherein the at least one processing circuitry is further configured to:
before storing the first thread context in the first context storage, store in the first context storage a fourth thread context of a fourth thread of the plurality of concurrent threads, the fourth thread context identified in the first context storage by yet another identification value;
complete execution of the respective at least one operation associated with the first context storage for the fourth thread before completing execution of the at least one first operation; and
store the first thread context in the second context storage while an outcome of applying the availability test to the yet another identification value indicates that the yet another identification value is not available in the second context storage.

13. The system of claim 1, wherein the first context storage has a capacity to store an identified amount of thread contexts; and
wherein a total number of concurrent threads in the plurality of concurrent threads executed simultaneously by the at least one processing circuitry exceeds the identified amount of thread contexts.

14. A method for executing a plurality of concurrent threads, comprising:
while a first thread and a second thread of a plurality of concurrent threads are executed simultaneously by at least one processing circuitry:
storing, by the at least one processing circuitry, a first thread context of the first thread in a first context storage of a plurality of context storages, the first thread context identified in the first context storage by an identification value, where each of the plurality of context storages is configured to store a plurality of thread contexts, each thread context for one of the plurality of concurrent threads, each concurrent thread comprising a plurality of operations, each of the plurality of context storages associated with at least one operation of the plurality of operations;
storing, by the at least one processing circuitry, a second thread context of the second thread in a second context storage of the plurality of context storages, the second thread context identified in the second context storage by the identification value; and
upon completing execution of at least one first operation of the first thread, the at least one first operation associated with the first context storage, when an outcome of applying a credit test to the identification value indicates that the identification value is available in the second context storage, storing, by the at least one processing circuitry, the first thread context in the second context storage, the first thread context identified in the second context storage by the identification value.

15. A software program product for executing a plurality of concurrent threads, comprising:
a non-transitory computer readable storage medium;
program instructions for:
while a first thread and a second thread of a plurality of concurrent threads are executed simultaneously by at least one processing circuitry:
storing, by the at least one processing circuitry, a first thread context of the first thread in a first context storage of a plurality of context storages, the first thread context identified in the first context storage by an identification value, where each of the plurality of context storages is configured to store a plurality of thread contexts, each thread context for one of the plurality of concurrent threads, each concurrent thread comprising a plurality of operations, each of the plurality of context storages associated with at least one operation of the plurality of operations;
storing, by the at least one processing circuitry, a second thread context of the second thread in a second context storage of the plurality of context storages, the second thread context identified in the second context storage by the identification value; and
upon completing execution of at least one first operation of the first thread, the at least one first operation associated with the first context storage, when an outcome of applying a credit test to the identification value indicates that the identification value is available in the second context storage, storing, by the at least one processing circuitry, the first thread context in the second context storage, the first thread context identified in the second context storage by the identification value;
wherein the program instructions are executed by at least one computerized processor from the non-transitory computer readable storage medium.
